(19) Europäisches Patentamt
European Patent Office
Office européen des brevets

(11) EP 2 757 879 B1

(12) **EUROPEAN PATENT SPECIFICATION**

(45) Date of publication and mention of the grant of the patent:
**29.08.2018 Bulletin 2018/35**

(21) Application number: **12780851.7**

(22) Date of filing: **24.09.2012**

(51) Int Cl.:
***A01N 1/02*** (2006.01) ***A61L 2/00*** (2006.01)
***A61K 35/14*** (2015.01)

(86) International application number:
**PCT/IB2012/055062**

(87) International publication number:
**WO 2013/042095 (28.03.2013 Gazette 2013/13)**

(54) **PLATELET LYSATE, USES AND METHOD FOR THE PREPARATION THEREOF**

BLUTPLÄTTCHENLYSAT SOWIE VERWENDUNGEN DAVON UND VERFAHREN ZU SEINER HERSTELLUNG

LYSAT DE PLAQUETTES, SES UTILISATIONS ET SON PROCÉDÉ DE PRÉPARATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **23.09.2011 IT RM20110500**

(43) Date of publication of application:
**30.07.2014 Bulletin 2014/31**

(73) Proprietors:
- **Università degli Studi di Roma "La Sapienza" 00185 Roma (IT)**
- **Futura Stem Cells Sa 6900 Lugano (CH)**

(72) Inventors:
- **FRATI, Giacomo 00185 Rome (IT)**
- **FRATI, Luigi 00185 Rome (IT)**
- **PIERELLI, Luca 00185 Rome (IT)**
- **NUTI, Marianna 00185 Rome (IT)**

(74) Representative: **Capasso, Olga et al**
**De Simone & Partners SpA**
**Via Vincenzo Bellini, 20**
**00198 Roma (IT)**

(56) References cited:
**EP-A1- 2 100 954 WO-A1-89/10398**

- **VAN RHENEN ET AL: "Functional characteristics of S-59 photochemically treated platelet concentrates derived from buffy coats.", VOX SANGUINIS, vol. 79, no. 4, 1 January 2000 (2000-01-01), pages 206-214, XP055020825, ISSN: 0042-9007**
- **H. G. KLEIN: "Pathogen inactivation technology: cleansing the blood supply", JOURNAL OF INTERNAL MEDICINE, vol. 257, no. 3, 1 March 2005 (2005-03-01) , pages 224-237, XP055020803, ISSN: 0954-6820, DOI: 10.1111/j.1365-2796.2005.01451.x**
- **LILY LIN ET AL: "Inactivation of viruses in platelet concentrates by photochemical treatment with amotosalen and long-wavelength ultraviolet light", TRANSFUSION, vol. 45, no. 4, 1 April 2005 (2005-04-01), pages 580-590, XP055020841, ISSN: 0041-1132, DOI: 10.1111/j.0041-1132.2005.04316.x**
- **DANIEL TZU-BI SHIH ET AL: "Expansion of adipose tissue mesenchymal stromal progenitors in serum-free medium supplemented with virally inactivated allogeneic human platelet lysate", TRANSFUSION, vol. 51, no. 4, 1 April 2011 (2011-04-01), pages 770-778, XP055020793, ISSN: 0041-1132, DOI: 10.1111/j.1537-2995.2010.02915.x**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 757 879 B1

- **VICENTE MIRABET ET AL: "Human platelet lysate enhances the proliferative activity of cultured human fibroblast-like cells from different tissues", CELL AND TISSUE BANKING, KLUWER ACADEMIC PUBLISHERS, DO, vol. 9, no. 1, 20 June 2007 (2007-06-20), pages 1-10, XP019570750, ISSN: 1573-6814**
- **LIN L ET AL: "Use of 8-methoxypsoralen and long-wavelength ultraviolet radiation for decontamination of platelet concentrates.", BLOOD JUL 1989 LNKD- PUBMED:2752129, vol. 74, no. 1, July 1989 (1989-07), pages 517-525, XP002670761, ISSN: 0006-4971**
- **Susanne M. Picker ET AL: "Functional characteristics of buffy-coat PLTs photochemically treated with amotosalen-HCl for pathogen inactivation", TRANSFUSION., vol. 44, no. 3, 1 March 2004 (2004-03-01), pages 320-329, XP055379839, US ISSN: 0041-1132, DOI: 10.1111/j.1537-2995.2003.00590.x**
- **Harry M. Georgiou ET AL: "Proteomic analysis of human plasma: Failure of centrifugal ultrafiltration to remove albumin and other high molecular weight proteins", PROTEOMICS, vol. 1, no. 12, 1 November 2001 (2001-11-01), pages 1503-1506, XP055379811, DE ISSN: 1615-9853, DOI: 10.1002/1615-9861(200111)1:12<1503::AID-PROT1503>3.0.CO;2-M**

**Description**

FIELD OF THE INVENTION

The present invention relates to a rapid, simple, effective and economical method for preparing platelet lysate (LP or PL) which is free of contaminants that can generate the transmission of diseases caused by viral, microbial, fungal or parasitic agents, also called inactivated lysate (LP or PL). The present invention relates to the use of the platelet lysate obtained as an adjuvant for the culture, growth and/or expansion of stem cells, in particular mesenchymal stem cells derived from adipose tissue, fibroblasts and dendritic cells.

BACKGROUND ART

Mesenchymal stem cells (MSC) are multipotent progenitors capable of self-replication and of orienting themselves along different lines of differentiation. Given its characteristics and potentialities, this cell source has aroused strong interest among researchers and clinicians in consideration of the possible therapeutic applications, especially in regenerative medicine(1,2). Bone marrow is the most widely used and studied source of MSC. Though mesenchymal precursors are scantly represented in bone marrow (0.001-0.01%), they can be easily expanded *ex vivo* and can actively replicate themselves in appropriate culture media. The possibility of expanding MSC *ex vivo* has opened new horizons and opportunities for therapeutic applications in tissue regeneration and use as cellular means for systemic immunomodulation. However, the majority of the protocols initially adopted for the expansion of MSC *ex vivo* used culture media supplemented with sera of animal origin that had a potential risk of transmitting pathogens or inducing allergic reactions.

Platelet lysate (LP or PL) can be an alternative to animal serum as a source for MSC growth (3,4).

EP 2 100 954 refers to the use of platelet lysate as foetal animal serum substitute in a culture medium intended to the proliferation or propagation of primate ES cells maintaining their pluripotency feature. In particular, EP 2 100 954 refers to a PL derived from platelet-rich plasma, concentrated by ultrafiltration.

WO 89/10398 refers to a blood platelet lysate which has been obtained from plasma from animal whole blood and to a method for preparing said platelet lysate and a cell culture medium containing the same. The platelet fraction is separated from plasma and concentrated, whereupon the platelets are caused to lyse. The obtained lysate of platelets can be used to wholly or partly replace foetal calf serum in cell culture, such as in culture of hybridoma cells for preparing monoclonal antibodies.

By virtue of their physiological tissue repair function, platelets are a rich source of numerous growth factors such as PDGF (platelet-derived growth factor), b-FGF (basic-fibroblast growth factor), VEGF (vascular endothelial growth factor) and TGF-β (transforming growth factor-β). However, the concentration of such factors in platelet lysate is highly variable. Therefore, the preparation of platelet lysate intended for an MSC expansion procedure for clinical purposes requires a multiple source in order to compensate for individual variability and a standardized protocol.

Although current donation screening strategies for the prevention of diseases transmissible through transfusion therapy include highly sensitive virological, molecular and serological tests, the risk of transmission of hepatic viruses, acquired immunodeficiency and other pathogens (bacteria, parasites) or new emerging viruses represents an element of uncertainty in the adoption of PL preparations in protocols for MSC to be expanded for therapeutic purposes. For a better understanding of the problem tied to the residual possibility of transmitting diseases caused by pathogenic agents contaminating blood products, it is useful to consider that still today the risk of transmission of hepatitis B virus (HBV) is equivalent to 1 case out of 280,000-350,000 in developed countries, with higher frequencies in Mediterranean countries and Eastern Europe, 1 case out of 1,500,000-4,000,000 for the acquired immunodeficiency virus (HIV) and 1 case out of 1,000,000-2,000,000 for hepatitis C virus C (HCV)(5). As regards the bacterial contamination of blood components, this occurs with a prevalent frequency in platelet products. It most frequently derives from bacteria of cutaneous origin and hence from normal saprophytes of human skin or, alternatively, from environmental contamination of the places where blood components are processed and stored. In platelet products, the frequency of bacterial contamination is around 1 case out of 1,500 and the consequent frequency of adverse reactions potentially related to the re-infusion of bacterial species with platelet transfusion is around 1 case every 10,000-100,000(6). In the context of PLs, it should also be considered that these are assembled products originating from at least 10-12 donors given the necessity of amplifying the pool of source individuals so that the release of trophic factors is as homogenous as possible and the variability of individual donors is minimized. Therefore, each risk mentioned should be increased by at least one log, making bacterial contamination likely in 1 case out of every 150 products and HBV transmission possible in 1 case out of every 30,000 products.

Moreover, the risk of transmittable disease must also be correlated with new forms of contagion ascribable to the greater inclination of donors to travel and stay in regions where viral, parasitic and bacterial diseases are endemic and the ever increasing contribution of donations from communities that have migrated to our countries from countries to which diseases with an infectious etiology and potentially transmittable through blood products are endemic. The screenings relied on to ensure the safety of transfusions do not in fact explore, except in certain defined circumstances, the presence of silent, asymptomatic infectious forms such as Chagas disease, malaria, babesiosis, dengue, leishmaniasis, viremia caused by the West Nile virus, chikungunya, H1N1 influenza, Epstein Barr virus or viral pathogens of recent interest such as the xenotropic murine leukemia virus (XMLV), associable with some forms of cancer in humans and chronic fatigue syndrome. This increases the residual risk of transmission of bloodborne disease by a further, incalculable factor, especially in the case of platelet products which are systematically subjected to leukocyte removal (the self-sterilization capacity of blood thus being completely lost) and stored at room temperature in considerable quantities of plasma (plasma constitutes a medium for survival or optimal growth for a number of pathogens).

The epidemiological context described casts serious doubts upon the advisability of using PL as such as a source for stimulating the growth and amplification of MSC. In fact, though on one hand it constitutes a potent product - which is all the more homogeneous in terms of the degree of stimulation when it is obtained from a large number of donors - on the other hand it represents a component that also carries a greater risk, with respect to diseases transmittable by known and unknown pathogenic agents, precisely when the number of source donors increases. This circumstance poses a limit that is difficult to overcome in the production and use of a source of stimulation like PL where the latter must be used for procedures leading to clinical grade therapies and for therapeutic approaches that are still experimental and whose health impact on the respective pathogenic forms has not been firmly established. Therefore, a condition of health uncertainty would arise, as was experienced in the last century when anti-haemorrhagic blood derivatives (anti-haemophilia factors VIII and IX) were produced without industrial forms of fractionation and pathogen inactivation, implying a risk of transmittable disease that is by now unacceptable for any type of blood-derived drug, all the more so in the case of preparations used in experimental, unconfirmed settings. A realistic possibility of increasing the safety of a blood-derived product obtained not through industrial processes but rather in laboratories, a donor screening approach providing prompt, cost-effective detection of the above-mentioned infectious agents not being feasible, consists in the possibility of relying on forms of pathogen inactivation of ascertained effectiveness. The registered substances presently available for pathogen inactivation of platelet concentrates are the Intercept® system by Cerus and the Mirasol® system by Caridian. The two systems possess similar biological virus, bacteria and parasite inactivation capabilities, but the Intercept® system boasts a by now well-established use in relation to thousands of inactivated products successfully used in transfusion therapies for subjects with a platelet defect. In contrast, the Mirasol® system can only boast a single phase III study and modest application in clinical settings(7). The Intercept® system relies on a UVA radiation-activatable substance represented by amotosalen, which is then removed from the inactivated component after photoillumination.

Van Rhenen et al., "Functional characteristics of S-59 photochemically treated platelet concentrates derived from buffy coats", Vox Sanguinis, vol. 79, no. 4, p. 206-214, 2000, refers to the preparation of platelet concentrates from buffy coats exposed to a photochemical treatment utilizing psoralen and UVA light for increasing safety of platelets transfusion.

H. G. Klein, "Pathogen inactivation technology: cleansing the blood supply", Journal of internal medicine, vol, 257, no. 3, p. 224-237, 2005, refers to preparation of platelet concentrates, for use in blood transfusion, exposed to amatosalen and UVA-light for pathogen inactivation. Lily Lin et al., "Inactivation of viruses in platelet concentrates by photochemical treatment with amotosalen and long-wavelength ultraviolet light", Transfusion, vol. 45, no. 4, p. 580-590, 2005 refers to photochemical treatment with amatosolan-HCl and UVA of single-donor PLT concentrates. Said platelet concentrates are for use in blood transfusion.

Clinical experience demonstrates that the platelets treated with Intercept® produce a valid haemostatic effect, but with less valid increases in the platelet count after transfusion. In fact, inactivation brings about a reduction in the number of

available cellular elements in the preparations, as well as a reduced post-transfusion platelet recovery due to a negative dose-independent effect on the survival of the same after transfusion. This effect, which appears to be independent from the dose administered, period of storage and compatibility between donor and recipient, explains at least 40-50% of the reduced increases observed after inactivation(8). From a biological viewpoint, the platelets undergoing treatment with Intercept® show functional and metabolic alterations ascribable to a greater pH reduction during storage, a lower availability of excess bases (correlated with the more marked pH reduction), higher pO2 and pCO2, a higher consumption of glucose and production of lactate, a higher release of lactic dehydrogenase and a higher expression of p-selectin, a marker of platelet activation(9). Taken together, these phenomena demonstrate that the photoactivation of amotosalene, given a nearly complete sterilization of the product in terms of parasitic, viral and microbial contamination, brings about respiratory and metabolic stress in the treated platelets, as well as the activation thereof. In reference to the foregoing considerations, it becomes of absolute importance to evaluate how the platelet lysates obtained from pools of donors and then inactivated with well-established inactivation systems such as Intercept® maintain, downstream of inactivation, a trophic and stimulation capacity vis-à-vis MSC which is comparable to that of conventional platelet lysates. In fact, the metabolic stress observed could negatively impact the ability of the platelet lysate thus treated to release valid concentrations of stimulating factors and stimulate MSC growth and expansion.

Moreover, MSC have been isolated from various mesodermal tissues, including bone marrow(13), muscle(14),

perichondrium[15] and adipose tissue[16-17] and share key characteristics, such as an ability to adhere to plastic to form colonies of a fibroblastic type (CFU-F), an ample proliferative capacity, an ability to differentiate into various mesodermal cell lines such as bone, muscle, cartilage and fat and the expression of different common surface antigens. In particular, MSC derived from human adipose (hADMSCs) have become an attractive cellular source because they can be recovered in large numbers, are easily expanded in vitro and express the same surface markers as MSC derived from bone marrow[18-19]. Furthermore, hADMSCs have demonstrated a strong angiogenic potential[20] and their differentiation toward adipogenic, osteogenic, chondrogenic, neurogenic, haematopoietic and cardiogenic phenotypes has been described[21-22]. Specifically, it has been demonstrated that cardiac differentiation of hADMSCs could be obtained spontaneously[23-24] by using 5-azacytidine[25] or exposing them to extracts of rat cardiomyocytes[25]. Moreover, human ADMSCs have been demonstrated to reduce the infarcted area after injection in mouse models of myocardial damage[27-29]. In 2009 it was reported that MSC can be obtained from omental adipose deposits[30] and show no differences from parietal fat. Recently, a population of multipotent stem cells from mediastinal deposits has been further characterized[31], providing the first evidence of a population of stem cells in a site other than the body.

Tenon's fibroblasts (TFs) represent a preferential system for in vitro experimentation with new therapeutic molecules[32,33] or the development of new in vitro diagnostic methods, new products and toxicological screening. In addition, TFs are still widely studied to gain a better understanding of the role of growth factors involved in inflammatory pathologies and in cellular differentiation into myofibroblasts[34]. Cell culture models of human TFs are essential in order to understand important processes such as the healing of wounds, extracellular protein synthesis, drug delivery, and migration and proliferation in pathological or physiological eye conditions[35] or in the presence of specific growth factors[36-38]. Moreover, the standardized methods for planning a manufacturing process for IMPs (Investigational Medicinal Products, in particular ophthalmological products) require preliminary steps that are indispensable for all applications in which safety and reliability are fundamental. At present, TFs are still cultured in the presence of fetal calf serum or autologous serum. However, both of these systems have limits: firstly because of the potential risk tied to zoonosis and secondly because of the limited availability of autologous human serum for this type of long-term culture. A possible option for overcoming the above-mentioned problems could be to use PL, already successfully tested in various in vivo systems, such as the healing of skin wounds, orthopaedic repair and repair of periodontal lesions, and in eye treatments[39-43]. To date, and to the best of our knowledge, the possibility of culturing human Tenon's fibroblasts in the presence of PL has never been reported. In addition, TFs cultured with PL could represent an alternative in vitro model for studying the healing process during corneal lesions.

Dendritic cells (DCs) are the most important antigen-presenting cells because they have a central role in the initiation and development of immunity, being capable of activating naive T cells and contributing to inducing and maintaining peripheral tolerance. DCs undergo a process of differentiation, during which they acquire antigens, migrate toward lymphoid tissues and increase the activation potential of T cells[45]. Thanks to these properties, DCs are today considered as the primary constituent of cell-based immunotherapy protocols for anti-tumour vaccination[46].

With the growing development of vaccination strategies for modulating immunity in a variety of diseases, there is strong interest in identifying and defining protocols and reagents which enable optimal production of DCs from peripheral blood monocytes. The replacement of serum components of animal origin is one of the points of interest for the production of clinical grade DCs. In the past decade, a number of serum-free media have been introduced for the generation of DCs, but these cells often show a decrease in performance.

Overall, the above considerations bring to light the importance of producing platelet lysates from an appropriate number of donors as an optimal stimulus for MSC, adopting a form of pathogen inactivation which reduces tranfusional risk and evaluating the effects of the inactivation process on an optimized PL production method using clinical grade production systems. Moreover, there exists a need to produce a PL that is suitable for generating and/or sustaining the growth of mesenchymal stem cells derived from adipose tissue and clinical grade DCs and for isolating and/or expanding Tenon's fibroblasts in vitro. In particular with the objective of abolishing the addition of serum components of animal origin to generate cultures of clinical grade DCs used for human vaccination protocols and of improving the performance of DCs generated in serum-free media.

With the aim of producing a PL with a maximum level of safety, a protocol was developed for the preparation of PL in a closed system which uses buffy coat platelet units previously subjected to a pathogen inactivation procedure. The products thus obtained were evaluated in terms of effectiveness and safety and compared to control PLs produced in a similar manner, but omitting the inactivation process.

SUMMARY OF THE INVENTION

In the present invention, a method for producing PLs was established and it was demonstrated that the PL thus produced is capable of supporting the isolation and/or cellular growth of mesenchymal stem cells, including those obtained from adipose tissue. Moreover, this PL enables fibroblasts and dendritic cells to be isolated and/or expanded *in vitro.*

Therefore, the subject matter of the invention relates to a method for preparing a pathogen-inactivated platelet lysate capable of acting as a coadjuvant for the isolation and/or growth and/or expansion of stem cells, fibroblasts or dendritic cells, comprising the steps of:

a) isolating a buffy coat fraction from a mixture of whole blood specimens obtained from at least two subjects;
b) exposing the isolated buffy coat fraction to a photochemical agent and UV radiation under conditions such as to obtain an isolated pathogen-inactivated buffy coat fraction;
c) subjecting said fraction to at least one freezing/thawing cycle in such a manner as to achieve lysis of the platelets contained therein;
d) centrifuging said fraction and collecting the liquid phase.

wherein the photochemical agent is a psoralen and the UV radiation is UVA and wherein the obtained pathogen-inactivated platelet lysate is substantially equivalent in terms of concentrations of factors with a trophic-regenerative action, namely PDGF, VEGF, TGF-beta and basic FGF, compared with an identical non-inactivated platelet lysate. More preferably, the psoralen is amotosalen. In a preferred embodiment the photochemical agent is used at a final concentration of 150 umol/L. Preferably, the exposure to UVA radiation is 3 J/cm$^2$.

Also described is a platelet lysate essentially free of contaminating agents and capable of acting as an adjuvant for the isolation and/or growth and/or expansion of stem cells, fibroblasts or dendritic cells obtainable with the method according to any preceding claim.

Also described is the use of the platelet lysate essentially free of contaminating agents of the invention as an adjuvant for the isolation and/or growth and/or expansion of stem cells, fibroblasts or dendritic cells.

Preferably, the stem cells are mesenchymal. More preferably, the stem cells are derived from adipose tissue. Preferably, the fibroblasts are Tenon's fibroblasts. In a preferred embodiment the platelet lysate essentially free of contaminating agents and capable of acting as an adjuvant for the isolation and/or growth and/or expansion of stem cells, fibroblasts or dendritic cells is added to the culture medium for said cells at a concentration of between 5% and 10%.

The present invention makes it possible to obtain a platelet lysate essentially free of contaminating agents, usable for the culture of stem cells, in particular mesenchymal stem cells, dendritic cells and fibroblasts, in particular Tenon's fibroblasts.

In present invention the buffy coat fraction is defined as a transfusion level concentrate of leukocytes and platelets, with modest red blood cell contamination; it is obtained by centrifugation of donated blood and constitutes the basic unit for the assembly of platelet concentrates for therapeutic use made up of 6-12 different buffy coats obtained from an equal number of healthy donors.

A platelet lysate essentially free of contaminating agents is defined as a sterile platelet preparation essentially free of infecting agents such as encapsulated and non-encapsulated viruses, parasites, bacteria and endotoxins, i.e. a platelet lysate containing such infecting agents in a quantity that cannot be detected with culture-based, serological or molecular identification systems or with the LAL test insofar as endotoxins are concerned.

The cells cultured in this manner can be advantageously used for therapy and reintroduced into subjects.

The present invention will be described through non-restrictive examples, making reference to the following figures:

Fig. 1: Diagram of the protocol for preparing the platelet lysate. PLT: platelet concentrate.
Fig. 2: Exemplary sample of PL (PL0006 sub-batch 1, inactivated) after final packaging, labelling and freezing.
Fig. 3: Cellular growth of MNCs of bone marrow from seeding to the first passage (P1), and of the MSC derived from the first passage P1 to the third passage (P3) in the presence of the various LP: LP control 0001, LP control 0002, LP control 0003, LP inactivated 0004, LP inactivated 0005, LP inactivated 0006, LP inactivated 0007. They were used in cultures of MSC obtained from 5 different subjects (MSC1, MSC2, MSC4, MSC6, MSC8).
Fig. 4: Degree of purity and line fidelity of the different MSC cultured in the presence of the various LP (LP control 0001, LP control 0002, LP control 0003, LP inactivated 0004, LP inactivated 0005, LP inactivated 0006, LP inactivated 0007), evaluated at the first passage (P1) and third passage (P3) by flow cytometry analysis of the expression of specific surface markers **A:** CD105, **B:** CD166, **C:** CD90, **D:** CD71, **E:** CD73).
Fig. 5: Example of phenotype characterization with an evaluation of viability (7-AAD) associated with an analysis of the marker CD105 of MSC4 at the third passage (P3) in the presence of the LP inactivated 0004 (A,B,C,D) and the LP control 0003 (E,F,G,H).
Fig. 6: Example of MSC8 differentiation toward bone (O), adipose tissue (A) and chondrocytes (Co) after treatment with the LP control 0003 (O1, A1 and Co1) or after treatment with the LP inactivated 0004 (O2, A2 and Co2). C1 (LP control 0003) and C2 (LP inactivated 0004) are an example of undifferentiated controls stained for bone differentiation.
Fig. 7: human mediastinal ADMSCs cultured in PL (A) and FBS (B) at Passage 2 and in FBS at passage 4. Magnification 10X (A,B) and 20X (C)

Fig. 8: PL significantly increased the percentage of successful cultures obtained from Human mediastinal biospsies ($p<0.05$).

Fig. 9: Comparison between human mediastinal ADMSCs cultures in DMEM-LG and DMEM-HG with PL

Fig. 10: Comparison between human mediastinal ADMSCs cultures in DMEM-LG and DMEM-HG with FBS at passage 1 (A) and 2 (B). The best combination of DMEM-LG and PL increased the cell growth compared to FBS (C).

Fig. 11: Immunohenotype of human mediastinal ADMSCs at passage 3 (A). CFU-F of human mediastinal ADMSCs cultured in PL (B) or FBS (C)

Fig. 12: Images of human mediastinal ADMSCs cultured in PL and trans-differentiated in the adipogenic (A), osteogenic (B) and chondorgenic (C) lineage.

Fig. 13: Proliferative trend (A) and Cell viability (B) of TFs cultured in PL and FBS.

Fig. 14: Immunofluorescence for vimentin, red. DAPI, blue indicates nuclei.

Fig. 15: DC yield. CD14+ cells (monocytes) were immunomagnetically purified from PBMCs of 8 healthy donors. Monocytes were culture in different media (RPMI+10%FCS, RPMI+10%LP, CellGro, Cellgro+LP, AIMV and AIMV+LP) in presence of IL4 (2000U/mL) and GMCSF (50ng/mL) added at day 0 and day 2. After 5 days, immature DCs (iDCs) were collected and counted using Trypan Blue reagent. The results are reported as cell number per mL and represent the average values among 8 donors. The blue columns report DCs cultured in RPMI+FCS and RPMI+10%LP; the green columns describe the yield of DCs differentiated in Cellgro and Cellgro+LP; the red columns show the cells generated in AIMV and AIMV+LP.

Fig. 16: Expression of CD86 in differently treated iDCs. After 5 days of culture, iDCs derived from 8 donors were characterized for the expression of HLA-DR, CD14, CD86, CD83, CCR7, CD40 by cytofluorimetry (FACsCantoII, software FACsDiva). Data are reported as average value among 8 donors of Mean Fluorescence Intensity (MFI) of CD86. The blue columns report DCs cultured in RPMI+FCS and RPMI+10%LP; the green columns describe the yield of DCs differentiated in Cellgro and Cellgro+LP; the red columns show the cells generated in AIMV and AIMV+LP.

Fig. 17: DC endocytosis:. DC endocytosis were evaluated as FITC-Dextran up-take (1mg/ml) performed at 4° C (negative control) and 37°C for 2 hours. Data are reported as ratio between positive and negative samples. Endocytosis was studied in iDCs and matured DCs (mDCs) at day 6. Cell maturation was carried out at day 5 until day 6 (16 hours) and was induced adding TNF$\alpha$ (10ng/mL), IL6$\beta$ (10ng/mL), IL1 (10ng/mL) and $PGE_2$ (1$\mu$g/mL) to the cells. Results represent the average values of 4 donors.

Fig. 18: Intracellular IPN$\gamma$ staining. mDCs at day 6 of culture were stimulated with PMA (25ng/ml) and Ionomycin (250ng/mL) for 16 hours in presence of Brefeldin A(10$\mu$g/mL). At day 7 cells were permeabilized with Saponin solution at 0,5% and were treated with an anti-IFN$\gamma$ antibody. Stained cells were analyzed by BD FACScCantoII flow cytometer running BD FACsDiva data acquisition and analysis software. Results are reported as %IFN$\gamma$ and represent the average values among 4 donors.

DETAILED DESCRIPTION OF THE INVENTION

MATERIALS AND METHODS

**Protocol for the production and biological evaluation of PL**

*Production of pools of platelet concentrates*

The platelet concentrates (PLT) were produced from units of whole blood from suitable voluntary donors, collected in dedicated sterile circuits provided with a quintuple bag (Fresenius Kabi AG, Bad Homburg, Germany).

In order to produce PLT from buffy coats, the blood units were processed within six hours after collection. After it was verified that the whole blood withdrawal conformed to requirements (volume withdrawn, absence of visible coagulates, absence of chylosis), the unit underwent centrifugation at 6477 relative centrifugal force (rcf) x g for 12 min.

The following were extracted from each unit using Compomat G4 separators (Fresenius Kabi AG):

- 1 unit of fresh plasma
- 1 unit of buffy coat-depleted red blood cells
- 1 unit of buffy coat (BC) containing the platelet component.

The BC products were stored in an incubator at 22°C under continuous agitation and assembled to produce the pool within 24 h. The pool of 6 units of BC was prepared by connecting the BCs (Composeal, Fresenius Kabi AG) together under sterile conditions in a dedicated production environment, with InterSol saline solution (Fenwal Inc. Lake Zurich, Illinois, with the following composition: Na-citrate $2H_2O$ 318mg, $Na_2$-anhydrous phosphate 305mg, Na Dihydro-

gen-phosphate $2H_2O$ 105mg, Na-Acetate $3H_2O$ 442mg, NaCl 452mg, $H_2O$ 100mL) and the pool collection bag (BioP-plus single-use kit, Fresenius Kabi AG). The BC and final pool collection bags were identified by means of a specific label with a bar code associated with the pool being produced. At the end of the assembly procedure, the collection bag with the 6 BCs was closed and sealed (Composeal, Fresenius Kabi AG), disconnected from the processing kit and centrifuged at 480 rcf x g for 9 min. At the end of centrifugation, the platelet concentrate was separated from the residual BC using the automatic Compomat G4 separator.

*Pathogens inactivation procedure*

Two pools of 6 PLT units were subjected to pathogen inactivation by means of a photochemical treatment with psoralens and UV exposure (INTERCEPT Blood System for Platelets, Cerus Corporation, Concord, California USA). During the pathogen inactivation process using INTERCEPT technology, a compound of the psoralen family (*Amotosalen hydrochloride*) was introduced into the PLT pool; this compound, following to the exposure to UVA radiation, forms a covalent bond with any nucleic acids that may be present in the product and blocks the process of duplication of DNA and RNA helices.

For the inactivation procedure, the bag of the pool was sterilely connected to the INTERCEPT kit and the inactivation procedure was started; it takes place in a completely closed system and comprises the following steps:

- introduction, into the PLT pool, of the psoralen *Amotosalen (S-59,* INTERCEPT Blood System for Platelets, Cerus Corporation, Concord, California USA; product code INT2204B) at a final concentration of 150 μmol/L;
- exposure of the PLT pool supplemented with psoralen to UVA radiation 3 $J/cm^2$
- transfer of the product into a bag containing a specific device (CAD Compound Adsorption Device) for the removal of the psoralen;
- transfer into the final bag for storage of the product "Inactivated PLT Pool" until the use thereof.

The final PLT pool subjected to the inactivation treatment described was identified with a label bearing the barcode associated with the pool at the time of production and the specification "Inactivated".

At the end the inactivation procedure, the PLT units were resuspended in InterSol with a residual plasma percentage of about 20-30%.

From this step onward, the further operations of production of the PL were carried out in a class C controlled environment classified according to international guidelines for Good Manufacturing Practices (GMP), implemented at the European Community level through the following legislative provisions: EU GMP Directive "Manufacturing of Sterile Medicinal Products",-Annex 1, EU GMP Directive "Manufacture of Biological Medicinal Products for Human Use" -Annex 2, EMEA Guideline on Human Cell Based Medicinal Products - EMEA/CHMP/CPWP/323774/2005. The GMP guidelines provide for specific environmental control of particulate contamination which enables a laboratory to be classified as *grade* A, B, C or D according to the table below.

**Table I:** Laboratory classification

| Max number of particles/$m^3$ | | | | |
|---|---|---|---|---|
| | At rest | | During operation | |
| Grade | 0.5 μm | 5 μm | 0.5 μm | 5 μm |
| A | 3,500 | 1 | 3,500 | 1 |
| B | 3,500 | 1 | 350,000 | 2,000 |
| **C** | **3,500,000** | **2,000** | **3,500,000** | **20,000** |
| D | 3,500,000 | 20,000 | not defined | not defined |

*Production of platelet lysate*

Samples were drawn from the 2 PLT pools by inserting a sterile sampling device (Terumo, Tokyo, Japan) into the inlet provided in the bag (sterile "sampling site" of Fresenius Kabi AG collection devices) in order to determine the platelet count and sterility.

The platelet counts were carried out using the ABX Pentra DX 120 hematology analyzer (Horiba ABX, Montpellier, France). The sterility tests were performed with the BacT/ALERT System using media specific for aerobic and anaerobic bacteria and fungi (bioMérieux SA, Marcy L'Etoile, France).

At the end of the complete procedure, the volume of the pool of 6 units was 300 mL on average and platelet content ranged between 2.5 and 3.5 x $10^{11}$.

The 2 pools of 6 units of inactivated PLT were subsequently combined in a single bag, via a sterile connection (TSCD II, Terumo, Tokyo, Japan), so as to obtain a final pool with a volume of approximately 600 mL, made up of 12 units of inactivated PLT. The overall pool underwent 3 successive cycles of freezing (-80°C; kept at this temperature for 24 hours in a mechanical freezer) and thawing (37°C; thawing in a biological defroster for plasma units (Bloodline, KW, Siena, Italy), temperature maintained for 60 minutes) to ensure breakage of the platelets and the release of growth factors.

In order to remove the cellular stroma, the pool was divided into 2 bags and each of the 2 bags was sterilely connected (TSCD II) with a second transfer bag (600 ml, JMS Singapore PTE LTD, Singapore) so as to the remove the supernatant after 45' centrifugation at room temperature and 5313 rcf x g. The residual bag containing the cellular stroma was removed after double sealing and the centrifugation procedure was repeated using the same methods. At the end of preparation, samples were drawn for the final sterility test. In order to be able to use the PL produced according to the present invention in cell cultures for cellular therapies, in addition to aerobic and anaerobic bacteria and fungi, endotoxins were also tested for using the LAL test (Limulus Amebocyte Lysate; International PBI spa, Milan, Italy) with a sensitivity of 0.06 UE/mL.

The PL products were identified with a suitable code in written and barcode form serving to identify the production batch, aliquoted via a sterile connection (TSCD II) into paediatric bags (100 ml transfer bags for fresh frozen plasma, Fresenius Kabi AG), with identification of the sub-batches. Each sub-batch unit contained 40-50 mL of PL, equivalent to about 3 doses (to be intended as 3 doses for large-scale culture activities, each dose being sufficient to prepare a clinical grade culture with a starting volume of 100-150 ml) for the ex vivo expansion of MSC in closed systems - CellSTACK® CORNING® cell culture chambers (MacoPharma, Mouvaux, France; Corning Incorporated, Corning, New York, USA) - if used at a concentration of 10%.

Following the same operational scheme, excluding the viral inactivation step, inactivated PL was produced as a non-inactivated control.

The procedure for preparing the PLs is schematically summarized in the flowchart shown in Fig. 1.

*Evaluation of the content of MSC stimulating factors and the proliferative potential induced by the different preparations of PL on MSC.*

An immunoenzymatic assay was performed on the various PL products to determine the following factors using samples diluted to a varying degree, from 1:2 to 1:10:

- PDGF-AB (Quantikine Human PDGF-AB, R&D Systems, Minneapolis, Minnesota, USA)
- VEGF (Quantikine Human VEGF, R&D System)
- basic-FGF (Quantikine Human FGF basic, R&D System)
- TGF-Beta (Quantikine Human TGF-Beta 1, R&D System)

All the preparations of LP or PL (control PL 0001, control PL 0002, control PL 0003, inactivated PL0004, inactivated PL0005, inactivated PL0006, inactivated PL0007) were used in MSC cultures obtained from 5 different subjects (MSC1, MSC2, MSC4, MSC6, MSC8), starting from aliquots of bone marrow aspirated during the donation of stem cells for an allogeneic transplant, after specific informed consent was obtained (see next paragraph for details regarding the MSC cultures).

**Protocol for selecting and expanding MSC**

5 mL samples of bone marrow from a donor of allogeneic stem cells were used for the separation of mononuclear cells (MNC). After a complete blood count was performed to evaluate the initial lymphomonocytic component, the bone marrow was diluted 1:3 in Dulbecco's Phosphate Buffered Saline (PBS, Biowest S.A.S, Nuaillé, France) and the separation of MNCs was achieved by gradient sedimentation using Lympholyte (Cedarlane, Burlington, Ontario, Canada) as the separation medium and 30 minutes' centrifugation at 652 rcf x g at room temperature. Then followed 2 washings with PBS supplemented with 2% human albumin (Uman Albumin, Kedrion S.p.A., Lucca, Italy) and final resuspension of the cells in D-MEM GMP grade culture medium (Li-Star Fish, Milan, Italy). The lymphomonocytic component was re-evaluated through a blood count after separation on a gradient and a flow cytometry analysis was performed to evaluated the mesenchymal component identified by the cells CD71+ (allophycocyanin, APC, conjugated anti-CD71; Becton Dickinson, San Jose, California, USA), CD73+ (phycoerytrhin, PE, conjugated anti-CD73; Becton Dickinson), CD90+ (allophycocyanin, APC, conjugated anti-CD90, Becton-Dickinson), CD105+ (peridinin chlorophyll protein complex, PerCP, conjugated anti-CD105; Becton Dickinson; or fluorescein isothiocyanate, FITC, conjugated anti-CD105; Partec GmbH, Munster, Germany), CD166+ (PE conjugated anti-CD 166; Becton Dickinson), CD45-(FITC, conjugated anti-CD45, Becton-Dickinson) and CD34- (FITC, conjugated anti-CD34, Becton-Dickinson) using a FacsCalibur flow cytometer (Becton-Dickinson) and the above-mentioned monoclonal antibodies.

1 x $10^6$ MNCs/mL were placed in a D-MEM GMP *grade* culture medium supplemented with 10% PL (PL concentrations of 5% were also used and evaluated and gave results similar to those obtained with 10%) in T25 flasks (Asahi Techno Glass, Iwaki, Japan) in an incubator at 37°C, 5% $CO_2$. For the purpose of testing expansion on a large scale, an MSC expansion was carried out using CellSTACK® CORNING® cell culture chambers (MacoPharma; Corning Incorporated). 48 h after the start of the culture, the supernatant was removed and replaced with fresh medium. Thereafter, the medium was replaced every 4 days and the cells were examined under a microscope to evaluate adhesion, growth and confluence. When a cellular confluence of about 80% was reached, the adhering cells were removed with a trypsin treatment (GMP *grade,* Li Star Fish), centrifuged and counted with the flow cytometer using propidium iodide (Calbiochem, Merck KGSA, Darmstadt, Germany) and fluorospheres (Flow Count Fluorospheres, Beckman Coulter, Galway, Ireland). The propidium solution containing Tween is capable of permeabilizing the cell membrane so that the fluorescent propidium (FL2) can enter the cell and bind to the nucleic acids. The addition of fluorospheres at a known concentration(12) enables an absolute count of the MSC marked with propidium. The cells were moreover characterized as MSC using the same panel of surface markers indicated for the initial typing. This first passage was identified as P1.

For subsequent expansion, the cells were seeded at a concentration of 4000 cell/$cm^2$ (20,000 cell/mL) using the same culture conditions as described. When confluence was subsequently reached, passage 2 (P2), the cells were again removed, counted, typed and further expanded. At the third passage (P3), the cells were counted, characterized by flow cytometry analysis, which also included an evaluation of viability using 7-Amino-Actinomycin D (7AAD, Becton Dickinson), tested for their potential to differentiate in an osteogenic, adipose and chondrocytic direction and frozen in liquid nitrogen in order to verify their viability and replication and differentiation potential after freezing.

The expansion of the mesenchymal cells was calculated starting from Passage 1, in which over 95% of the cells showed the MSC phenotype (i.e. cells expressing the markers CD105, CD166, CD90, CD71, CD73).

**Protocol for evaluating the differentiation potential of the MSC**

For all lines of differentiation, the MSC were cultured in 35 millimetre Petri dishes (NUNC A/S, Roskilde, Denmark) at a concentration of 5000 cell/mL in an appropriately conditioned culture medium for 3 weeks, with replacement of the medium every 3-4 days. At the end of the 21 days of culture, selective staining was performed to detect the different cell types.

*Osteogenesis*

- Culture medium: α-MEM (Gibco Invitrogen, San Giuliano Milanese, Italy) supplemented with Desametasone $10^{-7}$M (Sigma-Aldrich, St Louis, Missouri, USA), Ascorbic Acid $10^{-5}$M (Sigma-Aldrich), β-Glycerophosphate $10^{-2}$M (Sigma-Aldrich).
- Detection stain: Fast Blue, Naftol AS-D Chloroacetate Esterase and α-Naphthyl Acetate Esterase (Sigma-Aldrich).

*Chondrogenesis*

- Culture medium: α-MEM (Gibco Invitrogen) supplemented with Desametasone $10^{-7}$M (Sigma-Aldrich), Ascorbic Acid $10^{-4}$M (Sigma-Aldrich), β-Transforming Growth Factor 10ng/mL (Sigma-Aldrich), Insulin 10μg/mL (Sigma-Aldrich).
- Detection stain: Toluidine Blue (Bio-Optica SpA, Milan, Italy).

*Adipogenesis*

- Culture medium: α-MEM (Gibco Invitrogen) supplemented with Desametasone $10^{-6}$M (Sigma-Aldrich), Insulin 10μg/mL (Sigma-Aldrich), 1-methyl-3-isobutylxanthine 5 x $10^{-4}$ M (Sigma-Aldrich), Indomethacin 60μM (Sigma-Aldrich).
- Detection stain: Oil RED O (Bio-Optica)

**Protocol for freezing and thawing MSC**

*Freezing procedure*

Aliquots of 2 x $10^6$ MSC (obtained at P3) in D-MEM GMP *grade* medium supplemented with 5% human albumin and 10% DMSO (WAK-Chemie Medical GmbH, Steinbach, Germany) as the final concentration were frozen in cryotubes using a freezing system with a dedicated programmed temperature descent protocol validated for freezing stem cells for transplantation purposes (Kryo 560-16 Planer; Planer PLC Sunbury-On-Thames, United Kingdom). The cells were cryopreserved in liquid nitrogen vapours for 3 months.

*Thawing procedure*

For thawing, the cryotubes were removed from the liquid nitrogen vapours and rapidly thawed in a temperature controlled bath set to 37°C. Once completely thawed, the cellular suspension was immediately diluted in PBS-EDTA (Miltenyi Biotec, Bergisch Gladbach, Germany) with 5% albumin and washed 3 times to completely remove the DMSO. At the end of the final wash, the MSC were counted with the flow cytometer and assessed for viability.

*Post-thawing expansion of MSC*

15,000 viable MSC/$cm^2$ were again placed in D-MEM GMP *grade* culture medium supplemented with the same preparation of PL used for selection and expansion prior to freezing (with concentrations of PL ranging between 5% and 10%). Upon reaching confluence, the adhering MSC were detached by means of a trypsin treatment, typed by flow cytometry analysis using the panel of monoclonal antibodies described above and expanded according to the "basic" protocol (i.e. the protocol as detailed in the previous paragraph "Protocol for selecting and expanding MSC") in order to evaluate the replication and differentiation potential after freezing.

**Evaluation of chromosome set and gene expression**

At the end of passages P1 and P3 the cells were placed in a culture medium at a concentration of 7000 cells/cm2, under the same culture conditions as previously described, and an analysis of the karyotype was performed in accordance with the protocols described in the International System for Human Cytogenetics Nomenclature.

**Cultures of mesenchymal stem cells derived from adipose tissue**

*Collection of Mediastinal Adipose Tissue and Cell Culture*

Adipose tissue from mediastinal and parietal biopsies were obtained from patients underwent thoracic surgery. Samples were stored in physiological solution and processed within 24 hours. Biopsies were washed with PBS then minced and digested by PBS/Trypsin/EDTA/1mg/ml Collagenase for 45 minutes at 37°C in a shaking water bath. Digestion was stopped using PBS 20% FBS. After filtration through 100□m filters and centrifugation at 1200 rpm for 5 minutes, the pellet was treated with the Erythrocyte lysis buffer to remove the red blood cells. Cells were then counted, resuspended in complete medium (DMEM-low glucose containing 10% PL/5U/ml of heparin/1%PenStrep/1%Glutammine/1% Non-essential Aminoacids) and seeded at 4000 cells/$cm^2$. All non-adherent cells were removed after 72 hours. The medium was changed every 3 days. Cultures were expanded until passage 6 by Trypsin/EDTA, then harvested, washed and centrifuged at 1200 rpm for 5 minutes. Cell count and viability was measured by Trypan Blue.

*FACS Analysis*

The phenotype of human mediastinal ADMSCs was evaluated by FACS Analysis using the following panel of primary and secondary antibodies: 0.2mg/ml mouse monoclonal CD105, 0.1 mg/ml mouse monoclonal CD44, 0.1 mg/ml mouse monoclonal CD90 (Abcam human Mesenchymal stromal cell marker panel Cat., 1:100 mouse monoclonal CD31, 0.25 mg/ml rabbit polyclonal CD117, 0.3 mg/ml rabbit polyclonal CD45, 1 mg/ml rabbit polyclonal CD133, rabbit alexafluor-488, mouse Fluorescein (FITC)- conjugated affinity pure goat antimouse IgG (H+L). Briefly, 2x$10^5$ cells were stained with the monoclonal antibody for 30 minutes at room temperature. After washing in PBS/BSA1%, cells were incubated with secondary antibody for 30 minutes in the dark at room temperature. Unstained cells and cells stained with secondary antibody alone were respectively used for the detection of autofluorescence and as isotype control. Cells were acquired by cytofluorimetry (FACSAria Becton & Dickinson, Mountain View, CA, USA) and analyzed by Software DiVa (v6.1.1).

*Fibroblastic like colonies Unit assay (CFU-F)*

Human mediastinal ADMSCs were seeded at passage 3 in complete medium (cell density of 20-40 cells/$cm^2$/100mm petri dish). Medium was changed after 72 hours. After 3 weeks of incubation, visible colonies were stained with Giemsa. Briefly, the petri dishes were washed with PBS and incubated for 2 minutes with Giemsa 100% (Sigma). Colonies were washed with distillated water then further treated with a PBS/Giemsa solution (1:20) for 13 minutes, washed again and then dried. Clusters of cells >5mm were considered positive and observed by microscope.

*Trans-differentiation tests (Adipogenic, Osteogenic and Chondrogenic Differentiation)*

Human ADMSCs were subjected to osteogenic, adipogenic and chondrogenic differentiation. Adipogenic differentiation was induced using the StemPro® Adipogenesis Differentiation kit (GIBCO, Invitrogen, Grand Island, NY), Cat. N. A10410-01). Briefly, $1x10^4$ cells/$cm^2$ were seeded in a 12 well plates and cultured for 3 weeks. Medium was changed every 3 days. Accumulation of lipid droplets was tested by Oil Red Oil staining after fixing the cells with 4% formalin. Osteogenic differentiation was induced using culturing the cells in medium containing $10^{-7}$ M dexamethasone, 10 $\mu$M ascorbic acid and 0.2M □-glycerophosphate. Briefly, $1x10^4$ cells/$cm^2$ were seeded in a 12 well plates and cultured for 3 weeks. Medium was changed every 3 days. The calcified matrix deposition was observed by staining with Alkaline phosphatase after fixing the cells with 4% formalin. Finally, the chondrogenic differentiation was induced using the StemPro® Chondrogenic Differentiation kit (GIBCO, Invitrogen, Grand Island, NY Cat N. A10069-01). Briefly, $2x10^5$ cells were centrifuged in a 15 ml tube. After removing the supernatant, the differentiation medium was slowly added leaving the pellet undisturbed and culturing the cells for 3 weeks. Medium was changed every 3 days. Chondrospheres were stained with Alkaline phosphatase.

**Tenon's fibroblasts (TFs)**

The isolation and the expansion of TFs was performed as already described[(44)]. Briefly, the explants were rinsed with PBS/1%Pen/Strep then chopped using a sterile n.21 scalpel and forceps into small, round pinhead size pieces and leant onto a 35mm petri dish applying a light pressure on them. Carefully 500$\mu$l of complete medium (DMEM/1%PenStep/1%Glutammine/1%Non-essential aminoacids/10% FBS or 10% PL) were added. The following day 200$\mu$l of complete medium was slowly added, and subsequently changed every 3 days after which the cultures were monitored daily by an optical microscope. Between day 10-30, the explants were removed from the dish using forceps, transferred into a 15ml sterile tube, the cells trypsinized with the Cell Dissociation solution (Non enzymatic component animal free, Resnova Cat. N. 03-071-1B) and transferred into the same 15 ml tube where the small pieces of explant were allowed to lay. The supernatant was carefully removed, centrifuged at 1200rpm for 10 minutes and finally the cells were cultured into a new 35mm petri dish with complete medium and incubated at 37°C at 5% $CO_2$. TFs cultures were maintained up to passage 6 in complete medium with FBS or PL.

*Quality control tests*

a) cell growth and viability was measured by Trypan Blue exclusion according to the formula (Ang 2006):

$$\text{Number of cell doublings} = 3.322 \log 10\ N/N0$$

where N is the number of cells obtained and N0 is the number of cell plated; b) immunofluorescence for Vimentin: 1 x 104 Tenon's or DFs were fixed with 4% paraformaldeyde and Permeabilized with 0.5% Triton X-100 (Sigma) for 10 minutes, incubated in blocking buffer (0.2% Gelatin, Sigma) for 1h at room temperature then washed twice in PBS. The primary antibody Vimentin (1:200, Santa Cruz, clone V9) was incubated overnight at +4°C, whereas the secondary antibody (1:1000, AlexaFluor 594 Invitrogen) was added at room temperature for 1h. A staining for DAPI was performed before acquiring by fluorescent microscope (Leica, software IAS2000).

**Dendritic cells (DCs)**

*Generation of DCs*

DCs were generated from CD14+ cells (monocytes) obtained from PBMCs of 8 healthy donors and purified by means of magnetic balls (Miltenyi). The monocytes were then cultured for 5 days in: RPMI 1640 (Hyclone) + 10%FCS (Hyclone); RPMI 1640 +10%PL; CellGro (CellGenix); Cellgro + 10%PL; AIMV (Invitrogen); AIMV+ 10%PL in the presence of IL4 (2000 U/mL) (R&D System) and GMCSF (50 ng/ml) (R&D System) added on day 0 and day 2. After 5 days the DCs are considered immature (iDCs). The mature DCs (mDCs) were obtained by adding TNFα (10 ng/ml), IL6β (10 ng/ml), IL1 (10 ng/ml) and $PGE_2$ (1 μg/mL) (all R&D system) to the culture of iDCs on the fifth day for 16 hours at 37°C.

*Phenotype characterization of DCs*

The DCs were characterized using the following panel of monoclonal antibodies:
anti-HLA-DR FITC, anti-CD14-PE, anti-CD86-FITC, anti-CD83-PE, CCR7-FITC and anti-CD40-PE (Becton Dickinson). $IgG_1$ or $IgG_{2a}$-FITC and $IgG_1$ or $IgG_{2a}$-PE were used as the isotype control. $10^4$ events were acquired using the BD FACSCanto II and the data were processed with BD FACSDiva software.

*Endocytosis*

The endocytosis of the iDCs and mDCs was evaluated on the 6th day of differentiation as the uptake of Dextran conjugated to the FITC. The cells were resuspended in the respective culture media (100,000/100μL of medium) in the presence of 1mg/ml of Dextran-FITC (Sigma) for 2 hours at 4°C (negative control) or 37°C. The DCs were then washed in PBS and acquired on a BD FACSCanto II flow cytometer.

*Intracellular staining of IFNy*

On the 6th day of culture, the mDCs were stimulated with Phorbol Myristate Acetate (PMA) (25 ng/ml) (Sigma) and Ionomycin (250 ng/mL) (Sigma) for 16 hours in the presence of Brefeldin A (10 μg /mL) (Sigma). On day 7, the cells were fixed with 2% paraformaldehyde and permeabilized with a solution of 0.5 % Saponin (Sigma). They were then stained with the anti-IFNγ-FITC antibody (Becton Dickinson), acquired by flow cytometry using the BD FACSCanto II and analyzed with BD FACsDiva software.

RESULTS

**MSC**

7 preparations of PL were produced, identified respectively as PL (control) 0001, PL (control) 0002, PL (control) 0003, PL (inactivated) 0004, PL (inactivated) 0005, PL (inactivated) 0006, PL (inactivated) 0007, 3 controls and the remaining 4 subjected to an inactivation process with the Intercept® system. Microbiological tests (for aerobic and anaerobic bacteria, fungi and endotoxins) showed all 7 preparations to be sterile and they were thus used in the protocols for the selection and expansion of MSC from bone marrow. Figure 2 shows an exemplary sample of PL (PL0006, inactivated) after final packaging, labelling and freezing. The assay of soluble factors with a trophic-regenerative action typical of PL - namely, PDGF-AB, VEGF, bFGF and TGF-b - showed the presence of expected values, comparable to those observed in other experiences of preparing PL. In particular, no relevant differences were observed between the concentrations of the factors in the control PLs and inactivated PLs, demonstrating that the entire process of preparation, including the delicate inactivation phase, enables an optimal release of the expected factors, in the expected concentrations. Table II shows the concentrations of each factor detected in the individual preparations of PL.

**Table II.** Concentrations of factors in the various PLs, measured with the immunoenzymatic method

| | PDGF-AB (pg/ml) | VEGF (pg/ml) | bFGF (pg/ml) | TGF-b (pg/ml) |
|---|---|---|---|---|
| Control PL 0001 | 20,700 | 920 | 110 | 15,000 |
| Control PL 0002 | 28,830 | 751 | 99 | 11,000 |
| Control PL 0003 | 21,710 | 530 | 100 | 14,000 |
| **AVERAGE control PL** | **23,75** | **733,67** | **103** | **13,33** |
| Inactivated PL0004 | 22,760 | 560 | 118 | 10,200 |
| Inactivated PL0005 | 20,530 | 490 | 88 | 16,990 |
| Inactivated PL0006 | 27,500 | 880 | 97 | 13,000 |

(continued)

| | PDGF-AB (pg/ml) | VEGF (pg/ml) | bFGF (pg/ml) | TGF-b (pg/ml) |
|---|---|---|---|---|
| Inactivated PL0007 | 24,360 | 990 | 100 | 14,800 |
| **AVERAGE inactivated PL** | **23,78** | **730** | **100,75** | **13,75** |

Moreover, the concentrations of the factors detected in the various PLs are homogeneous. The assembly of products originating from 12 donors serves to minimize interindividual variability in the release of the factors themselves, a characteristic that was also preserved by the inactivation process. The evaluation of concentrations in the diluted samples gave results that were consistent with the dilution factor introduced.

From the donors of allogeneic stem cells the authors obtained, by physically isolating the MNCs and culturing the MSC in the presence of the various preparations of PL produced according to the protocol of the invention, 5 distinct primary lines of MSC, called MSC1, MSC2, MSC4, MSC6 and MSC8 already in P1 (Passage 1, see the Methods section).

All the PLs were evaluated for their ability to support growth of all lines of MSC in PI, P2 and P3 and to sustain a coherent, homogeneous phenotype with respect to line characteristics, cell viability and the osteogenic, adipose and chondrocytic potential of the MSC at P3.

Figure 3 shows, on a logarithmic scale, the numerical increase of the various samples of MNCs of medullary blood from seeding in the culture medium until the reaching of P1 in the presence of the different PLs, and MSC expansion from this experimental point up to P3.

At the time of seeding, each cell selection and expansion experiment was set up with an initial number of $10 \times 10^6$ bone marrow MNCs overall. The reaching of P1 coincided with the obtainment of an adherent, homogeneous monolayer which, as shown by the subsequent fig. 4, consisted of MSC with a purity of at least 90%, based on the expression of the line markers. The total cell counts obtained after amplifying, for each sample, all of the MSC obtained at P1 are shown for P1 to P3.

From Fig. 3 it may be observed that the different PLs, both the controls and inactivated preparations, supported the cellular growth of the various samples in a comparable manner, both in terms of reaching P1 and in the expansion of MSC from P1 to P3.

The results obtained at P2 are not shown, but at this point in the experimentation as well the various PLs displayed an equal and comparable capacity for supporting the cellular expansion of the different MSC. In general it is possible to observe that from the time of seeding until P1 the selection and expansion of the MSC line is obtained with a substantial cellular loss of the undesired contaminating MNC component.

From step P1 to P3, the MSC in a pure state expand, in some cases reaching a total number of elements greater than $150 \times 10^6$. The rate of expansion, expressed as the numerical amplification obtained at P3 starting from the MSC seeded at PI, is shown in Table III.

**Table III.** Expansion of the different samples of MSC from P1 to P3 in the presence of the various PLs. The expansion of each sample is expressed as the number of amplifications of the cell count; these numerical figures were calculated by dividing the absolute number of MSC recovered at P3 by the number of cells seeded at P1. The number of days of culture elapsing between the seeding and the reaching of P3 in the different MSC cultures in the presence of the various PLs is shown in brackets.

| | MSC1 P1→P3 | MSC2 P1→P3 | MSC4 P1→P3 | MSC6 P1→P3 | MSC8 P1→P3 |
|---|---|---|---|---|---|
| Control PL 0001 | 200.7 (27) | 73.5 (27) | 263.6 (28) | 112.5 (27) | 158.8 (27) |
| Control PL 0002 | 209.6 (28) | 76.6 (30) | 300 (27) | 112.3 (30) | 129.4(28) |
| Control PL 0003 | 171.5 (28) | 65.7 (31) | 311.1 (30) | 103.5 (30) | 143.7 (31) |
| Inactivated PL0004 | 197.7 (31) | 75 (28) | 238.4(29) | 108 (27) | 111.7 (27) |
| Inactivated PL0005 | 218.3 (27) | 68.9 (27) | 320 (30) | 111.1 (27) | 122.2 (31) |
| Inactivated PL0006 | 200.2 (27) | 67.7 (29) | 275 (27) | 130 (28) | 141.1 (27) |
| Inactivated PL0007 | 180.4 (30) | 85.7 (28) | 272.7 (27) | 128.5 (30) | 150 (28) |

Overall, the amplification rate observed from P1 to P3 ranged from a minimum of 65 (MSC2) to a maximum of 320 times (MSC4).

Furthermore, the degree of purity of the MSC obtained in the various passages, as shown by the expression of the specific line markers (evaluated by flow cytometry) is considerable and in any case comparable among the different samples of MSC obtained in the presence of the various PLs. Figure 4 shows the percentage of MSC expressing each line marker in the different MSC cultures in the presence of the various PLs.

The degree of purity and characterization of the different MSC, cultured in the presence of the various PLs, were evaluated at P1 and P3 by flow cytometry analysis of the expression of the specific surface markers (CD105, CD166, CD90, CD71, CD73). A substantial degree of purity was already demonstrated at PI, when all markers were present on at least 90% of the MSC obtained from all the cultures in the presence of the various PLs.

At P3, the degree of purity became absolute, with expression of the line markers in approximately 100% of the MSC in all cases analyzed.

The data for P2 are not shown in the figure but are comparable to those illustrated for P3.

The cytometric analysis enabled an evaluation both of the congruous phenotype expression of the MSC expanded from the different samples in the presence of the various PLs and of cell viability (associated with the analysis of the specific MSC antigen CD105). The concomitant analysis of viability demonstrated that in all of samples obtained at PI, P2 and P3, cell viability was constantly greater than 95% in all samples cultured with the control or inactivated PLs.

Figure 5 provides an example of phenotype characterization with an assessment of viability (7-AAD) associated with the analysis of the marker CD105 of MSC4 at P3 in the presence of the inactivated PL0004 (a,b,c,d) and control PL0003 (e,f,g,h); it shows a viability of 95.85 % and 94.75 % of MSC4, respectively.

Using the samples derived from MSC6 (expanded in the presence of the LP control 0003 and LP inactivated 0004) and MSC8 (expanded in the presence of the LP control 0003 and LP inactivated 0004) large-scale *clinical grade* cultures were set up in CellSTACK® CORNING® cell culture chambers and processed adopting the measures prescribed by GMPs, that is, operating in class A hoods located in class B background environments, with incubations in incubators at 37°C with 5% $CO_2$, located in the same class B laboratories. The expansions observed in these experiments were similar to those obtained in the small-scale experiments and, in particular, the authors observed an expansion of 98 times and 105 times for the MSC6 expanded with the control PL0003 and inactivated PL0004, respectively, and an expansion of 110 times and 100 times for the MSC8 expanded with the control PL0003 and inactivated PL0004, respectively.

The cell populations obtained at P3 in the "clinical grade" experiments (MSC6 expanded in the presence of the LP control 0003 and LP inactivated 0004 and MSC8 expanded in the presence of the LP control 0003 and LP inactivated 0004) were examined to determine the ability of the MSC to produce a differentiation *in vitro* in an osteogenic, adipose and chondrocytic direction.

In all cases analyzed, the MSC of P3 obtained both with the control and inactivated LP maintained the ability to differentiate in 21 days along the line of the osseous, adipose and cartilaginous precursors. Figure 6 shows an example of detection of the differentiation taking place in the samples cultured in differentiating media compared to controls cultured in standard media and originating from the line MSC8, in the presence of the LP control 0003 or LP inactivated 0004.

The specific stains demonstrate the cellular specialization still obtainable from the MSC cultured in the presence of the control and inactivated PLs, versus the undifferentiated control. This attests to the preserved functional capacity of the selected and expanded MSC which reached the experimental point P3.

Similar results in terms of differentiations taking place in an osteogenic, adipose and chondrocytic direction were obtained with the LP control 0003 and LP inactivated 0004 on the MSC6 line.

As already illustrated, the MSC6 and MSC8 were expanded and brought to P3 also using a large-scale "clinical grade" procedure and, being quantitatively abundant, they were also used to evaluate the biological potential of these cells after they underwent freezing/thawing with optimized controlled temperature descent procedures in the presence of a cryoprotector and temporary storage in nitrogen vapours for 3 months.

Immediately after thawing and washing to remove the cryoprotector, the thawed MSC6 and MSC8 (for these further experiments use was made of the MSC6 and MSC8 expanded up to P3 with LP inactivated 0004) were characterized with respect to viability and phenotype and such assessments served to demonstrate a viability that was always greater than 85% as well as a phenotype totally consistent with the line they belonged to, the frequency of the cellular elements expressing the markers CD105, CD166, CD90, CD71, CD73 being always higher than 95%.

The same thawed MSC were then subjected to a new in vitro expansion cycle, where a condition of growth and confluence was obtained which is comparable to that observed from P2 to P3 for the same cells, with amplifications of a further 100 (MSC6) and 105 (MSC8) times in the presence of the LP control 0003, and 105 (MSC6) and 120 (MSC8) times in the presence of the LP inactivated 0004.

The MSC re-expanded from MSC8 were induced to differentiate in an osteogenic, adipose and chondrocytic direction and the results obtained in terms of cellular specialization (revealed by the specific stains shown previously) were comparable to those observed for the same MSC8 prior to freezing, with an equal differentiation capacity for the MSC8 re-expanded both in the presence of the LP control 0003 and in the presence of the LP inactivated 0004.

In no MSC sample at P1, P2 and P3 and under no experimental condition of cellular growth - either on a small scale or on a large "clinical grade" scale, in the presence of either the control LP or LP inactivated did the authors observe any alterations in the karyotype of the MSC. The absence of such conditions was also demonstrated for all the MSC re-expanded after the freezing/thawing procedure.

The present invention demonstrates the possibility of preparing a pathogen-inactivated PL from a pool of units from several blood donors (in example 12) which undergo the appropriate qualification tests and processing in order to extract and assemble, in 2 initial semi-products (in the example, two distinct pools from 6 donors), each platelet suspension in storage solutions and reduced amounts of plasma. The two semi-products then undergo a pathogen inactivation process using the Intercept® system, which includes exposure to UVA radiation, in combination with systems designed to maintain circuit sterility and continuity; they are subjected to 3 freezing/thawing cycles to achieve platelet lysis, centrifuged and resuspended to remove the stroma and aliquoted into sterile bags that can be labelled and stored at -80°C and contain about 3 doses of LP per large-scale MSC culture. The production process was conducted in class C protected environments (see methods) using sterile connection systems. These measures, together with the pathogen inactivation process applied to the LPs considered, made it possible to obtain products that were always sterile and free of endotoxins and thus suitable for release and use on a clinical scale. The qualitative analysis of the inactivated LPs, compared to identical non-inactivated products, showed:

- a substantial equivalence of the products in terms of concentration of factors with a trophic-regenerative action, namely, PDGF, VEGF, TGF-beta and basic FGF;
- an equivalence from a functional standpoint, understood as the ability to select and expand lines of MSC obtained from different donors (evaluated in parallel with non-inactivated PLs) with a coherent, homogeneous phenotype; and
- an intact capacity for differentiation in an osteogenic, adipose and chondrocytic direction.

The MSC obtained with the inactivated LPs can also undergo vital-freezing and 3 months' storage in nitrogen vapours, preserving intact their expansion capacity if again subjected to the action of the inactivated LPs. As regards both the control LPs and inactivated LPs, the results presented and discussed appear comparable to those previously reported in the literature, as similar levels of trophic factors can be found in the LPs described, as well as a similar ability to sustain the growth of MSC, with the starting elements expanded by about 100-200 times, and a similar capacity for the differentiation of cellular growth after expansion

(3,4,10,11)

Specifically, the present invention demonstrates how a process of inactivation with a photochemical agent preserves the trophic properties and functional and stimulation capacities of the LP used for the selection and amplification of phenotypically valid MSC, which are intact in terms of differentiation potential and moreover cryopreservable.

Therefore, the product of the present invention, also defined as "Plasma-poor platelet lysate from pathogen-inactivated mini-pools" demonstrates to be feasible, effective and potentially free from contaminants that can generate the transmission of diseases caused by viral, microbial, fungal or parasitic agents.

**MSC from adipose tissue**

The standardization of the human mediastinal ADMSCs was achieved until passage 6 (14 patienrs, mean age 55$\pm$11 years) according to the following criteria: 1) the weight of the biopsy $\geq$10$\pm$2g,

2) cells were grown in DMEM-Low glucose or High glucose and combined with PL or FBS,
3) morphology, cell count and viability was checked at each passage by optical microscope and Trypan Blue,
4) Passage 2 was set up as the minimum threshold to consider a ADMSCs culture as successful.

As shown in Figure 7, human mediastinal ADMSCs isolated and cultured in PL are morphologically different from those in FBS. In fact, cells maintain a more rounded phenotype and a less differentiated spindle-like morphology (Fig. 7A), reaching the in vitro confluence faster than those in FBS (Fig. 7B). In addition, the FBS probably induces at later passages (Passage 4-6) a cell growth arrest, inducing a vacuolization of the ADMSCs as observed Figure 7C.

In addition the PL was able to significantly increase ($p<0.05$) the percentage of successful cultures, indicating that PL is a better substitute of the FBS in culture (Figure 8).

Afterwards to investigate the best medium condition and its optimal combination with PL or FBS, we have evaluated the number of cells at passage 1 and 2 with DMEM-Low glucose or High glucose and PL or FBS. Results show (Figure 9) that the combination DMEM-Low glucose and PL significantly increased the cell growth compared to DMEM-High glucose and PL at both passages 1 (p=0.01) and 2 (p=0.05).

Besides, as Figure 10A-B shows, any combination of DMEM-Low glucose and DMEM-High glucose with FBS (p=0,35 and p=0,8 passagge 1 e 2 respectively) was not able to significantly reproduce the same effects observed with the use of the PL, confirming that PL was able to preserve the cell proliferation of human mediastinal ADMSCs. In summary, in our experience, the best combination to achieve the best proliferation rate was DMEM-Low glucose and PL (Figure 10C).

*Immunophenotype of mediastinal ADMSCs and Assay (CFU-F)*

To assess the stem cells purity of the cultures, we analyzed the expression of the canonical panel of stem cell markers for MSC at passage 3: CD105, CD44, CD90, CD133, CD31, CD45, CD117. As shown in Figure 5A, human mediastinal ADMSCs cultures simultaneously expressed by citofluorimetry ≥75% of $CD105^+$, $CD90^+$, $CD44^+$ displaying a negative phenotype for CD133, CD45, CD31, CD117. No difference in the same markers were observed when ADMSCs were cultured in FBS. As consequence, the cultures were considered stem cells-enriched. Afterwards, to test the ability of human mediastinal ADMSCs cultures to function as stem cells, cells were plated at low density, incubated for 2 weeks and then observed by microscope after Giemsa staining. As shown in Figure 11B-C, multiple colonies are generated from single stem cells at passage 3, thus meaning that human mediastinal adipose tissue holds high-frequency percentage of stem cells. In line with the FACS Analysis we did not observe differences between cells cultured in presence of PL or FBS.

*Differentiation assay*

To test whether PL was able to influence the differentiation ability, human mediastinal ADMSCs were cultured for 3 weeks in commercial available media inducing osteogenic, adipogenic and chondrogenic differentiation towards the three mesodermal lineages. Our results showed that human mediastinal ADMSCs subjected to adipogenesis displayed lipid vacuoles, positive for Oil Red O staining (Figure 12A), whereas if subjected to osteogenic differentiation cells are positive for Alizarin Red S, due to the presence of calcium deposits (Figure 12B) and if differentiated toward cartilage they are positive for Alcian Blue, responsible of the staining of sulfated proteoglycans (Figure 12C).

**Tenon's fibroblasts**

Figure 13A shows that PL and FBS exhibit the same proliferative properties (p>0.05) until Passage 6. The cell viability was maintained high (mean all passages 98.1 ±0.48 FBS 98.4± 0.49 PL) and comparable to TFs cultured in FBS (Fig. 13B). The immunofluorescence shows a clear expression of the vimentin (Intermediate-filament associated protein in the fibroblasts). No variation were observed between PL and FBS (Figure 14).

**Dendritic cells (DCs)**

Furthermore, as demonstrated in figures 15-18, the PL of the invention can replace fetal calf serum (FCS) for the differentiation of DCs derived from monocytes and can be used to improve the functionality of the dendritic cells generated in commercially available serum-free GMP media (CellGro and X-VIVO15). In particular, the DCs cultured in the presence of PL show a cellular yield that is similar or superior to the yield generated in the absence of PL (Fig. 15). The PL of the invention up-regulates - in a statistically significant manner - the expression of CD86 during DC differentiation (Fig. 16). Moreover, the PL of the invention is capable of improving the endocytosis of immature DCs (Fig. 17) and increases the production of IFNγ by DCs after non-specific stimulation (Fig.18).

REFERENCES

1) Pittenger MF, Mackay AM, Beck SC et al. Science 1999; 284:143-147.
2) Lazarus HM, et al. Bone Marrow Transplant 1995; 16: 557-564.
3) Doucet C, Ernou I, Zhang Y et al. J Cell Physiol 2005; 205: 228-236.
4) Schallmoser K, Bartmann C, Rohde E et al. Transfusion 2007; 47: 1436-1446.
5) Dwyre DM, Fernando LP, Holland PV. Vox Sanguinis 2011; 100:92-98.
6) Wagner SJ. Vox Sanguinis 2004; 86: 157-163.
7) Vamvakas EC Transfusion 2011;51: 1058-1071.

8) Quaglietta A, Pierelli L, Ostuni A et al. Vox Sanguinis 2011; 101 Supplement 1: 185.
9) Picker SM, Speer R, Gathof BS Transfusion 2004; 44: 320-329.
10) Kocaoemer A, Kern S, Kluter H et al. Stem Cells 2007; 25: 1270-1278.
11) Parazzi V, Lazzari L, Rebulla P. Platelets 2010; 21: 549-554.
12) Brando B, Barnett D, Janossy G et al. Cytometry, 2000; 42: 327-346.
13) Pittenger, M. F., et al. Science, 284, 143-147, 1999
14) Howell, J. C., et al. Ann. N. Y. Acad. Sci., 996, 158-173, 2003
15) Arai, F., et al. J. Exp. Med., 195, 1549-1563, 2002
16) Zuk, P. A., et al. Mol. Biol. Cell, 13, 4279-4295, 2002
17) Gronthos, S., et al. J. Cell Sci., 116, 1827-1835, 2003
18) De Ugarte DA, et al. Immunol Lett., 89 (2-3):267-270, 2003
19) Boquest AC, et al. Mol Biol Cell, vol. 16(3):1131-1141, 2005
20) Casteilla L, et al. Curr Stem Cell Res Ther, Jun;5(2):141-4, 2010
21) Schaffler A, Buchler C., Stem Cells, 25(4):818-827, 2007
22) Strem BM, et al. Keio J Med, 54(3):132-141, 2005
23) Planat-Benard V et al. Circulation, 109:656-663, 2004
24) Planat-Benard V et al. Circ Res, 94: 223-29, 2004
25) Rangappa S, et al. Ann Thorac Surg. 2003 Mar;75(3):775-9
26) Gaustad KG et al. Biochem Biophys Res Commun., 314:420-427, 2004
27) Strem BM et al. Cytotherapy, 7:282-91, 2005
28) Yamada Y et al. Biochem Biophys Res Commun., 342:662- 70, 2006
29) Miyahara Y et al. Nat Med., 12:459-65, 2006
30) Baglioni, S., et al. FASEBJ. 10:3494-3505, 2009
31) Patel A.N., et al. Cell transplantation, 2012
32) Smyth RJ, More JJ, Shapourifar-Tehrani S, Lee DA J Ocul Pharmacol Winter;7(4):329-38, 1991
33) O'Neil EC, Qin Q, Van Berger NJ et al. Invest Ophtalmol Vis Sci. 51(12):6524-32, 2010
34) Denk, P.O., Hoppe, J., Hoppe, V. & Knorr, M. Curr. Eye Res. 27(1):35-44, 2003
35) Choritz L, ET AL. Graefes Arch Clin Exp Ophtalmol Feb;248(2):197-206, 2010
36) Kottler UB, Jünemann AG, Aigner T et al. Exp. Eye Res. 80:121-134, 2005
37) Wendt MD, Soparkar CN, Louie K, et al. J. Glaucoma 6(6):402-7, 1997
38) Leng F, Liu P, Li H et al. Curr. Eye Res. 36(4):301-309, 2011
39) Crovetti G et al. Transfus Apher Sci 30: 145-151, 2004
40) Intini G. Biomaterials 30: 4956-4966, 2009
41) Mazzucco L et al. Transfusion; 44:1013-1018, 2004
42) Ogino Y et al. Oral Surg Oral Med Oral Pathol Oral Radiol Endod; 101: 724-729, 2006
43) Anitua E et al. Biomaterials; 28: 4551-4560, 2007
44) De Falco E., et al. Cell Tissue Bank, 2012
45) Shakhar G, Nat Immunol, 2005
46) Palucka K, Nat Rev Cancer, 2012

## Claims

**1.** A method for preparing a pathogen-inactivated platelet lysate capable of acting as a coadjuvant for the isolation and/or growth and/or expansion of stem cells, fibroblasts or dendritic cells, comprising the steps of:

a) isolating a buffy coat fraction from a mixture of whole blood samples obtained from at least two subjects;
b) exposing the isolated buffy coat fraction to a photochemical agent and to UV radiation under conditions such as to obtain an isolated pathogen-inactivated buffy coat fraction;
c) subjecting said fraction to at least one freezing/thawing cycle in such a manner as to achieve lysis of the platelets contained therein;
d) centrifuging said fraction and collecting the liquid phase,

wherein the photochemical agent is psoralen and the UV radiation is UVA radiation and
wherein the obtained pathogen-inactivated platelet lysate is substantially equivalent in terms of concentrations of factors with a trophic-regenerative action, namely PDGF, VEGF, TGF-beta and basic FGF, compared with an identical non-inactivated platelet lysate.

2. The method according to claim 1, wherein the psoralen is amotosalen.

3. The method according to any one of previous claims wherein the photochemical agent is used at a final concentration of 150 umol/L.

4. The method according to any one of previous claims, wherein the exposure to UVA radiation is 3 J/cm$^2$.

## Patentansprüche

1. Verfahren für die Herstellung eines pathogeninaktivierten Plättchenlysats, das in der Lage ist, als Co-Adjuvans für das Isolieren und/oder Züchten und/oder die Expansion von Stammzellen, Fibroplasten oder dendritischen Zellen zu wirken, umfassend die Schritte des:

   a) Isolierens einer Buffy-Coat-Fraktion von einer Mischung von Ganzblutproben, die von mindestens zwei Subjekten erhalten worden sind;
   b) Aussetzens der isolierten Buffy-Coat-Fraktion einem photochemischen Mittel und UV-Strahlung unter Bedingungen, derart, um eine isolierte pathogenen-inaktivierte Buffy-Coat-Fraktion zu erhalten;
   c) Unterwerfens der Fraktion mindestens einem Gefrier-/Tauzyklus auf eine derartige Weise, die Lyse der darin enthaltenen Plättchen zu erreichen;
   d) Zentrifugierens der Fraktion und Auffangens der flüssigen Phase,

   wobei das photochemische Mittel Psoralen ist und die UV-Strahlung UVA-Strahlung ist und wobei das erhaltene pathogen-inaktivierte Plättchenlysat mit Bezug auf Konzentrationen Faktoren mit einer trophischregenerativen Wirkung, nämlich PDGF, VEGF, TGF-beta und basischem FGF, im Vergleich mit einem identischen nichtaktivierten Plättchenlysat im Wesentlichen äquivalent ist.

2. Verfahren nach Anspruch 1, wobei das Psoralen Amotosalen ist.

3. Verfahren nach irgendeinem der vorhergehenden Ansprüche, wobei das fotochemische Mittel in einer Endkonzentration von 150 μMol/l verwendet wird.

4. Verfahren nach irgendeinem der vorhergehenden Ansprüche, wobei die Exposition UVA-Strahlung gegenüber 3 J/cm$^2$ beträgt.

## Revendications

1. Procédé permettant de préparer un lysat plaquettaire à pathogène inactivé capable d'agir en tant que coadjuvant pour l'isolation et/ou la croissance et/ou l'expansion de cellules souches, de fibroblastes ou de cellules dendritiques, comprenant les étapes consistant à :

   a) isoler une fraction de couche leuco-plaquettaire provenant d'un mélange d'échantillons de sang complet obtenus à partir d'au moins deux sujets ;
   b) exposer la fraction de couche leuco-plaquettaire isolée à un agent photochimique et à un rayonnement UV dans des conditions permettant d'obtenir une fraction isolée de couche leuco-plaquettaire à pathogène inactivé ;
   c) soumettre ladite fraction à au moins un cycle de congélation/décongélation de manière à parvenir à la lyse des plaquettes contenues dans celle-ci ;
   d) centrifuger ladite fraction et recueillir la phase liquide,

   dans lequel l'agent photochimique est le psoralène et le rayonnement UV est un rayonnement UVA et
   dans lequel le lysat plaquettaire à pathogène inactivé obtenu est essentiellement équivalent en termes de concentration de facteurs à une action régénératrice trophique, à savoir PDGF, VEGF, TGF-bêta et FGF basique, comparé à un lysat plaquettaire identique non activé.

2. Procédé selon la revendication 1, dans lequel le psoralène est l'amotosalène.

3. Procédé selon l'une quelconque des revendications précédentes, dans lequel l'agent photochimique est utilisé à une concentration finale de 150 μmol/L.

**4.** Procédé selon l'une quelconque des revendications précédentes, dans lequel l'exposition à un rayonnement UVA est de 3 J/$cm^2$.

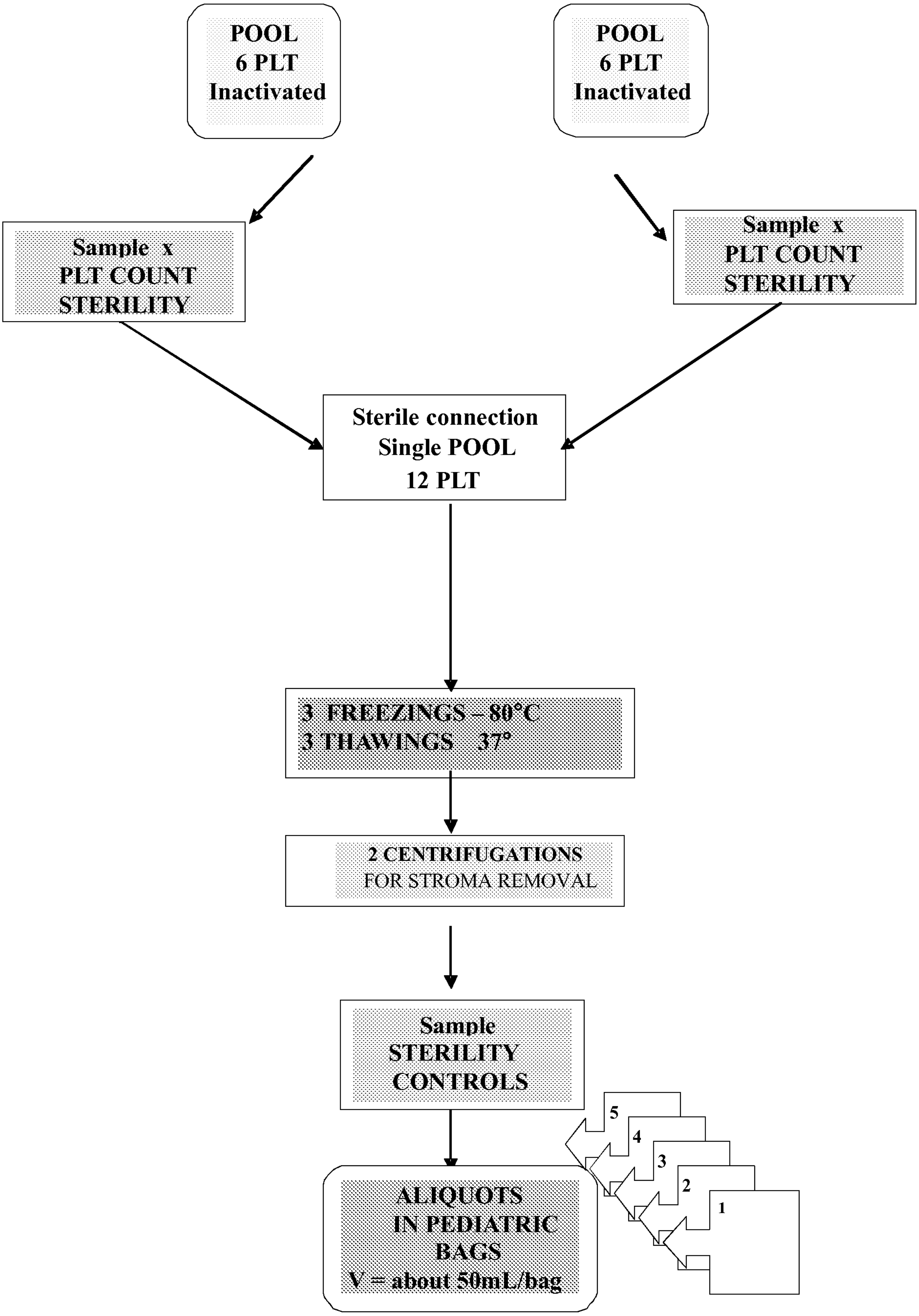
POOL
6 PLT
Inactivated
POOL
6 PLT
Inactivated
Sample x
PLT COUNT
STERILITY
Sample x
PLT COUNT
STERILITY
Sterile connection
Single POOL
12 PLT
3 FREEZINGS – 80°C
3 THAWINGS 37°
2 CENTRIFUGATIONS
FOR STROMA REMOVAL
Sample
STERILITY
CONTROLS
ALIQUOTS
IN PEDIATRIC
BAGS
V = about 50mL/bag
5
4
3
2
1

Fig. 1

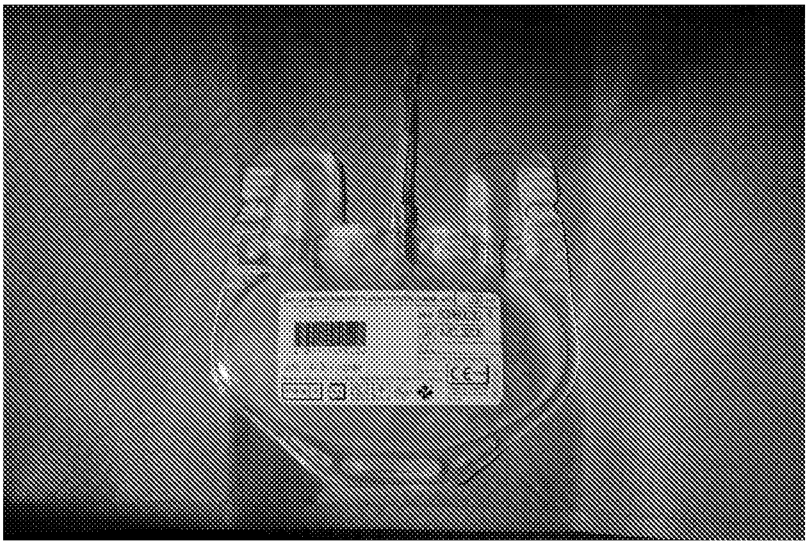

Fig. 2

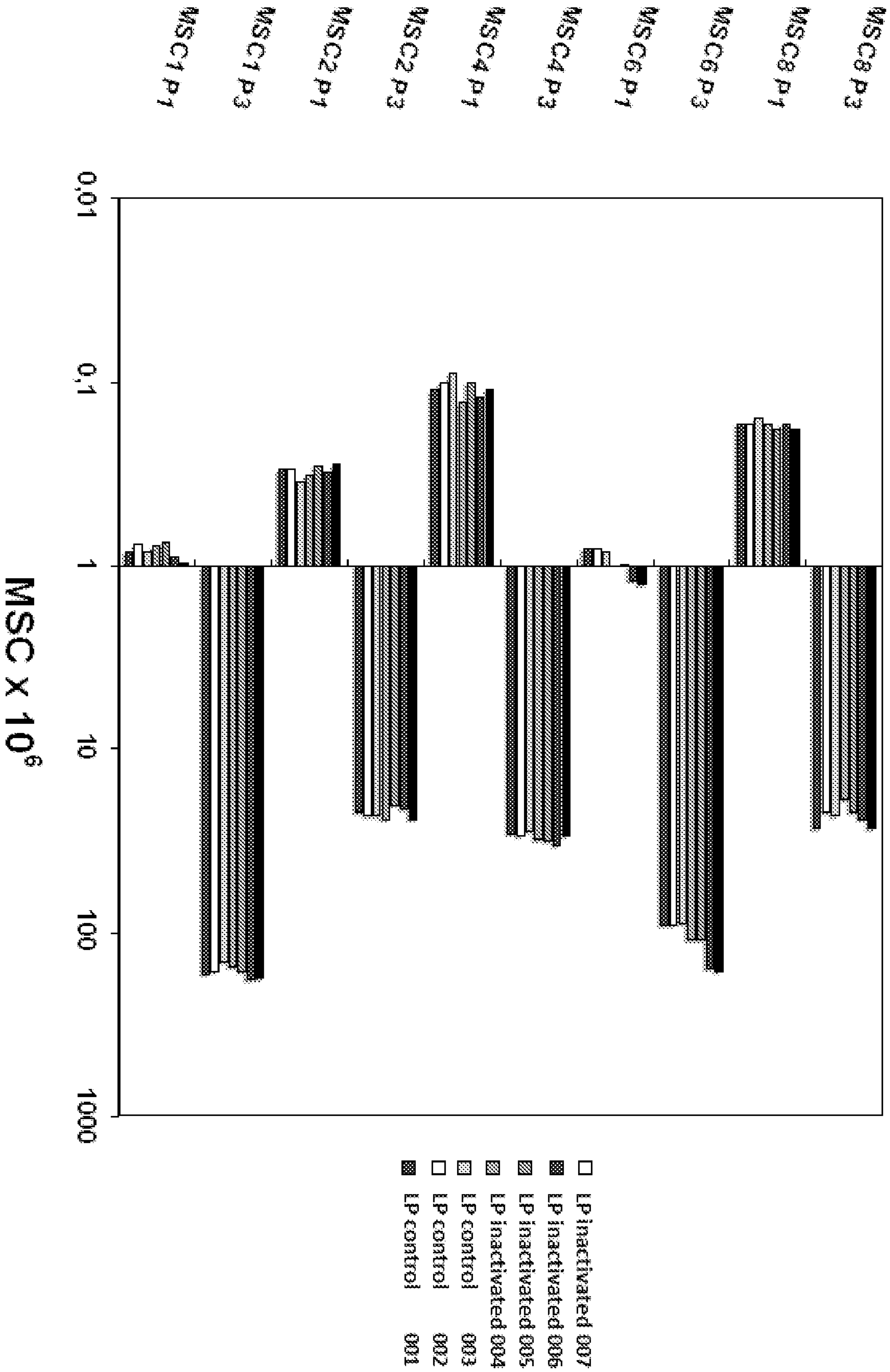
MSC1 P1
MSC1 P3
MSC2 P1
MSC2 P3
MSC4 P1
MSC4 P3
MSC6 P1
MSC6 P3
MSC8 P1
MSC8 P3
0,01
0,1
1
10
100
1000
MSC x 10^6
LP inactivated 007
LP inactivated 006
LP inactivated 005
LP inactivated 004
LP control 003
LP control 002
LP control 001

Fig. 3

A

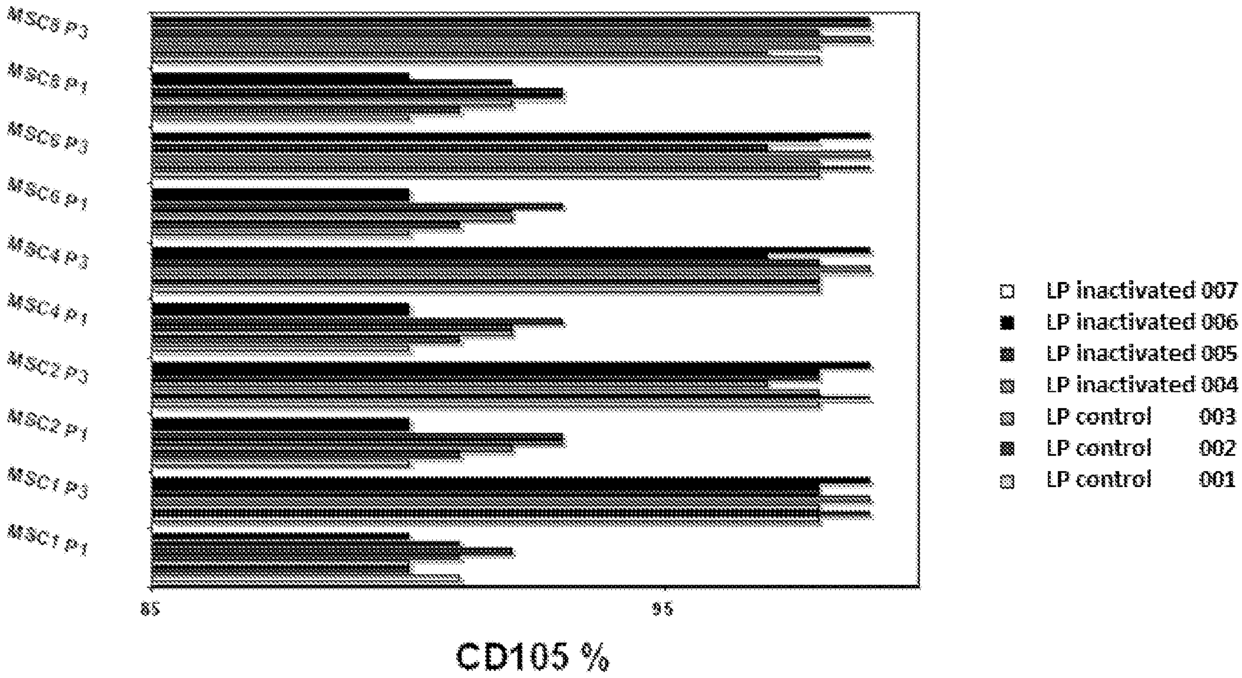
MSC8 P3
MSC8 P1
MSC6 P3
MSC6 P1
MSC4 P3
MSC4 P1
MSC2 P3
MSC2 P1
MSC1 P3
MSC1 P1
85
95
CD105 %
LP inactivated 007
LP inactivated 006
LP inactivated 005
LP inactivated 004
LP control 003
LP control 002
LP control 001

Fig. 4 (1/5)

B

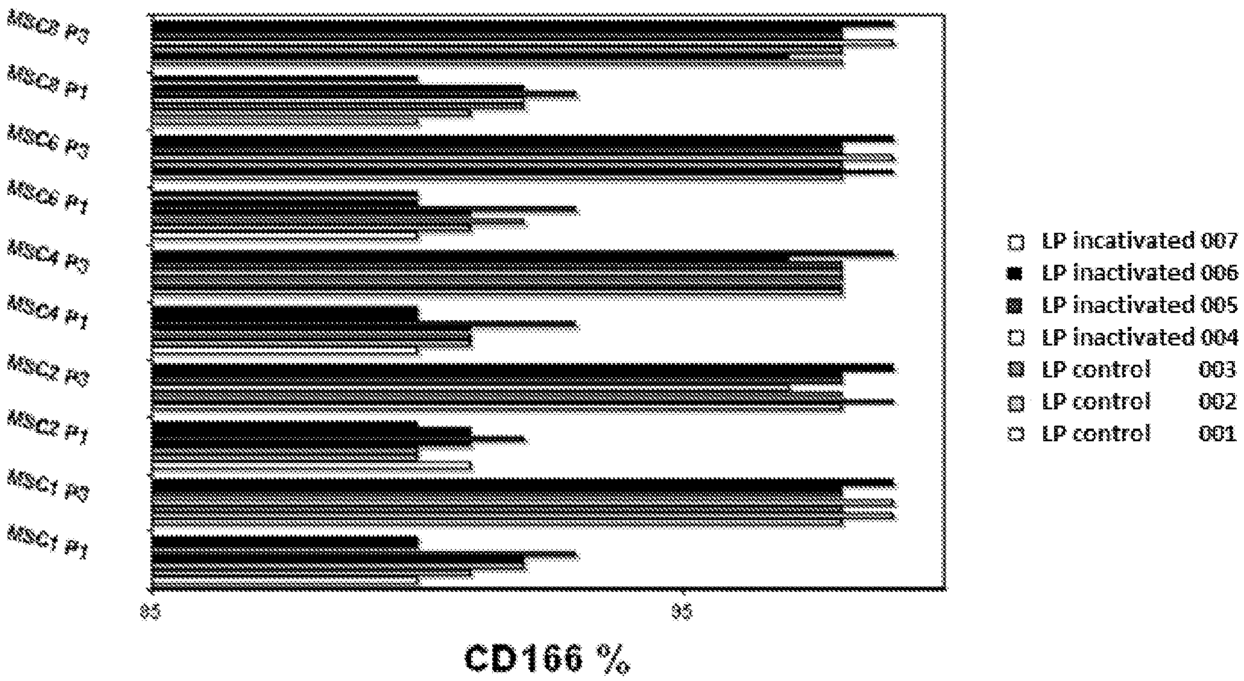
MSC8 P3
MSC8 P1
MSC6 P3
MSC6 P1
MSC4 P3
MSC4 P1
MSC2 P3
MSC2 P1
MSC1 P3
MSC1 P1
85
95
CD166 %
LP incativated 007
LP inactivated 006
LP inactivated 005
LP inactivated 004
LP control 003
LP control 002
LP control 001

Fig. 4 (2/5)

C

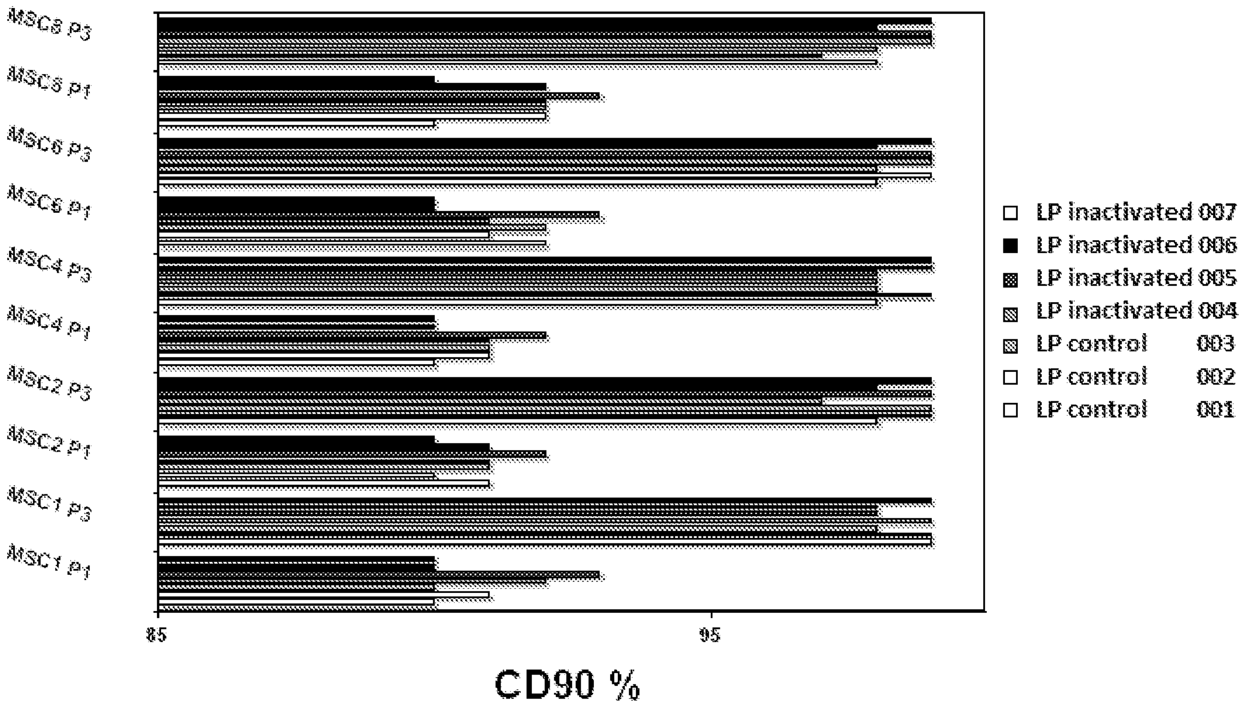
MSC8 P3
MSC8 P1
MSC6 P3
MSC6 P1
MSC4 P3
MSC4 P1
MSC2 P3
MSC2 P1
MSC1 P3
MSC1 P1
85
95
CD90 %
LP inactivated 007
LP inactivated 006
LP inactivated 005
LP inactivated 004
LP control 003
LP control 002
LP control 001

Fig. 4 (3/5)

D

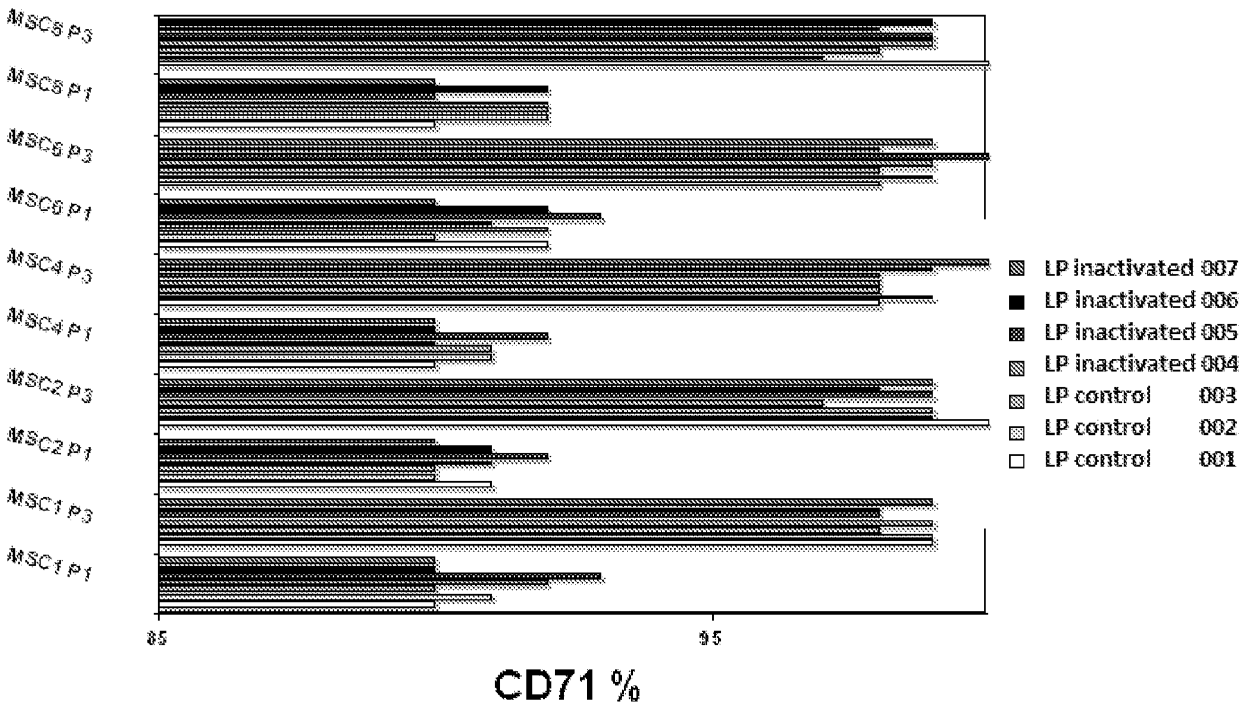
MSC8 P3
MSC8 P1
MSC6 P3
MSC6 P1
MSC4 P3
MSC4 P1
MSC2 P3
MSC2 P1
MSC1 P3
MSC1 P1
85
95
CD71 %
LP inactivated 007
LP inactivated 006
LP inactivated 005
LP inactivated 004
LP control 003
LP control 002
LP control 001

Fig. 4 (4/5)

E

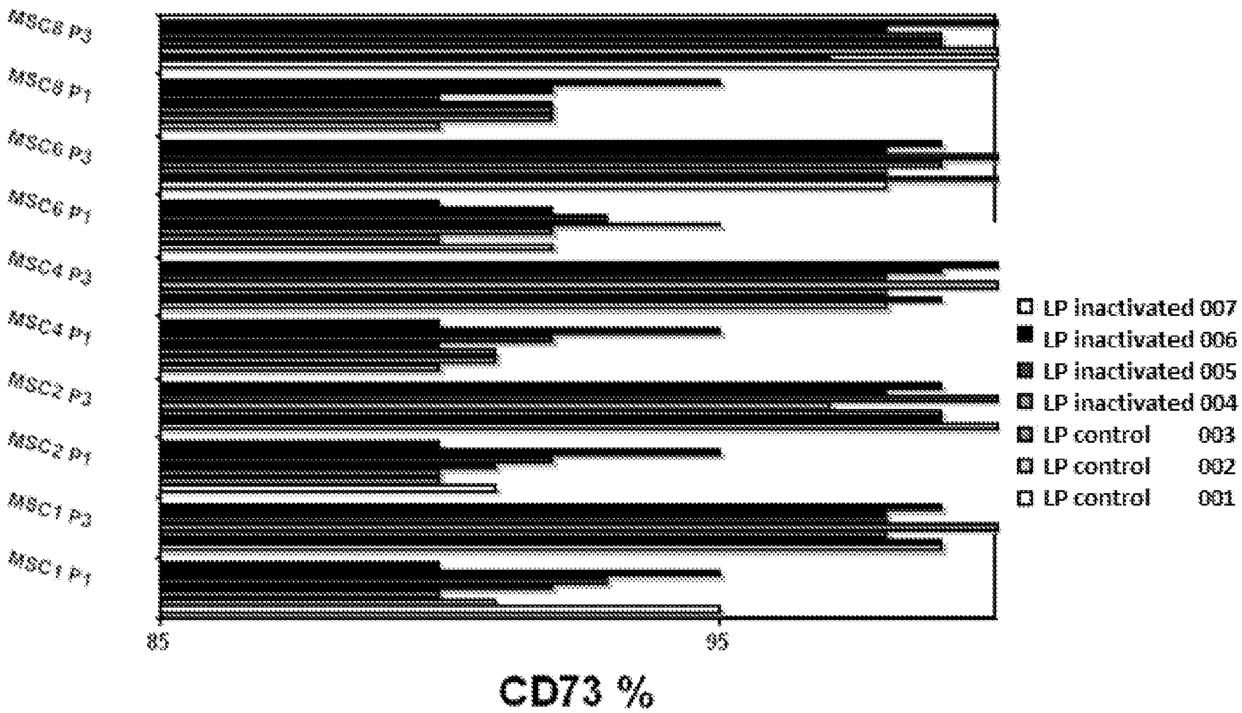
MSC8 P3
MSC8 P1
MSC6 P3
MSC6 P1
MSC4 P3
MSC4 P1
MSC2 P3
MSC2 P1
MSC1 P3
MSC1 P1
LP inactivated 007
LP inactivated 006
LP inactivated 005
LP inactivated 004
LP control 003
LP control 002
LP control 001
85
95
CD73 %

Fig. 4 (5/5)

A

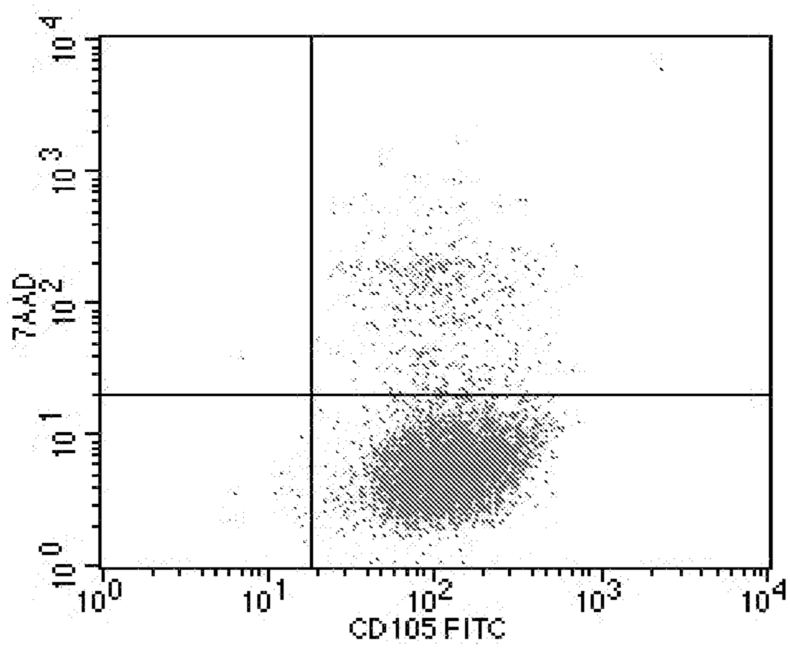


B

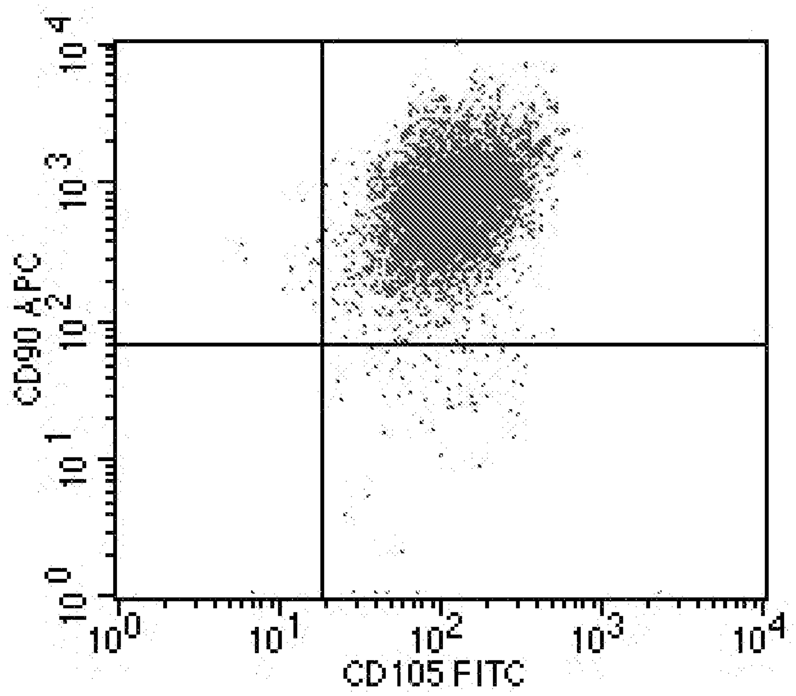


Fig. 5 (1/4)

C

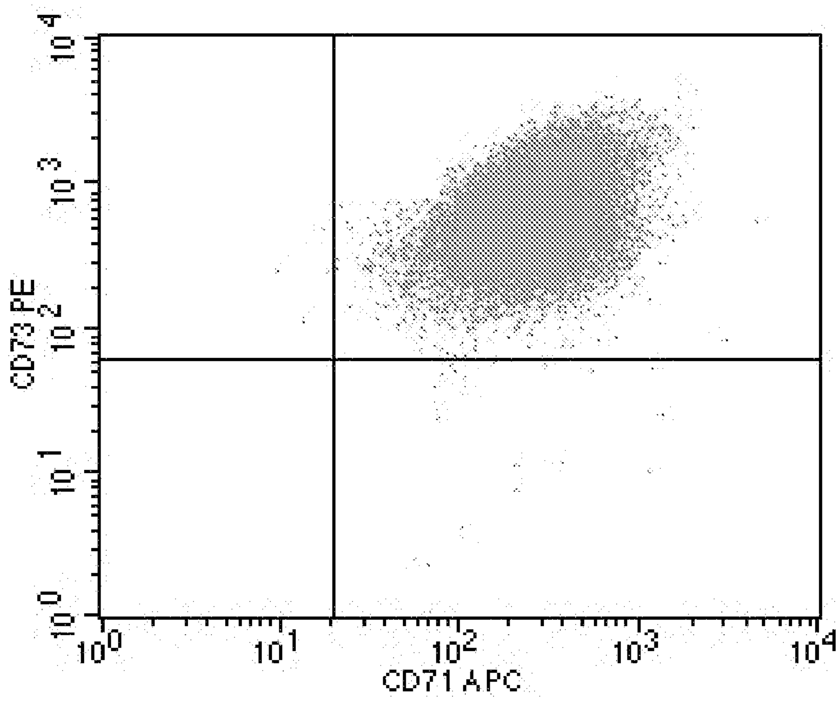
CD73 PE
CD71 APC
10^0
10^1
10^2
10^3
10^4

D

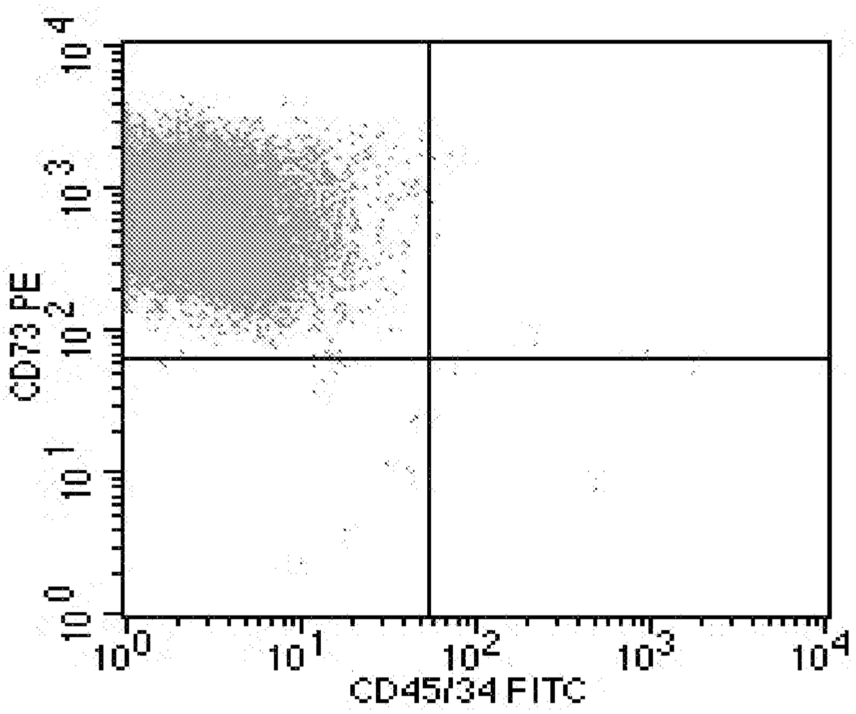
CD73 PE
CD45/34 FITC
10^0
10^1
10^2
10^3
10^4

Fig. 5 (2/4)

E

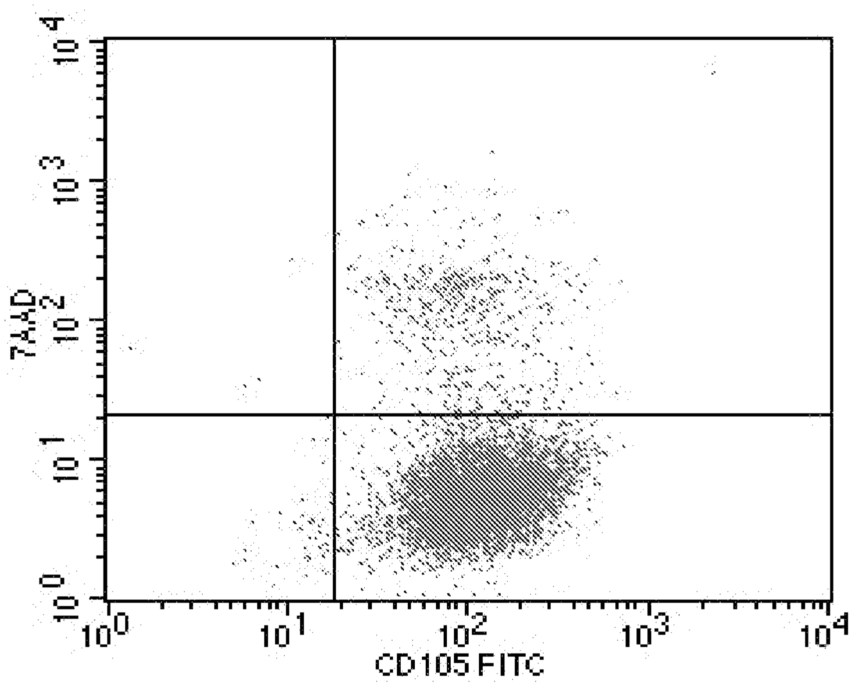
10^4
10^3
10^2
10^1
10^0
7AAD
10^0
10^1
10^2
10^3
10^4
CD105 FITC

F

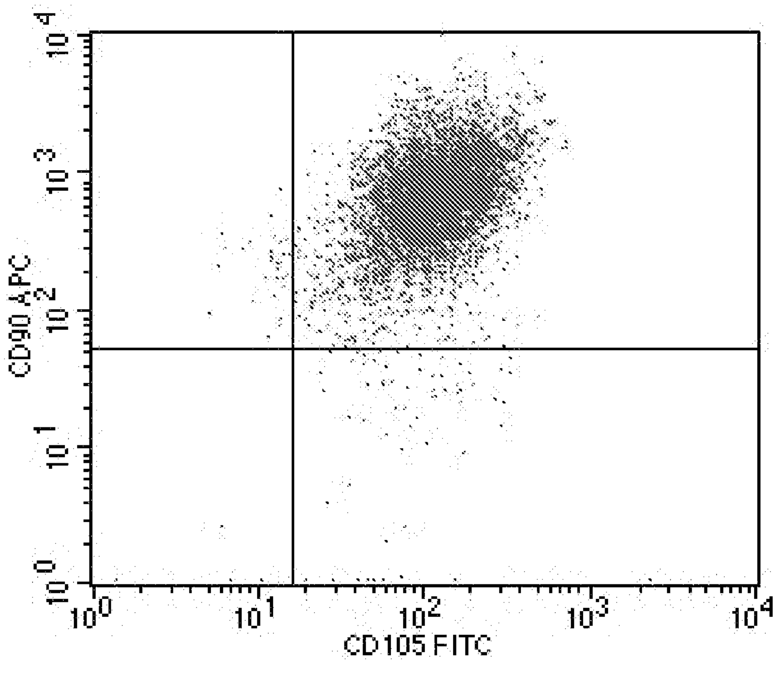
10^4
10^3
10^2
10^1
10^0
CD90 APC
10^0
10^1
10^2
10^3
10^4
CD105 FITC

Fig. 5 (3/4)

G

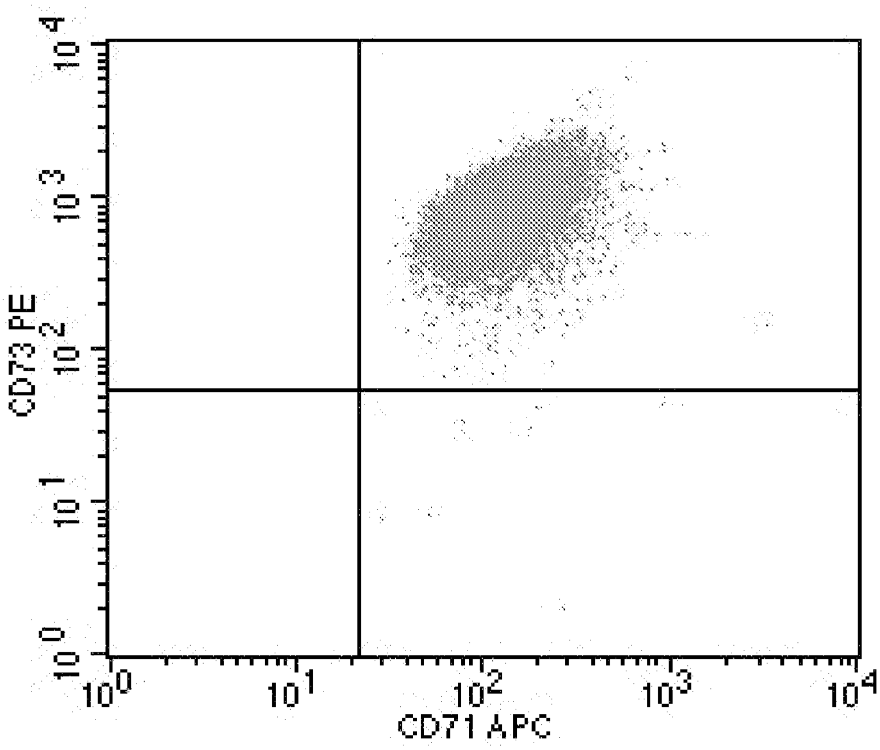


H

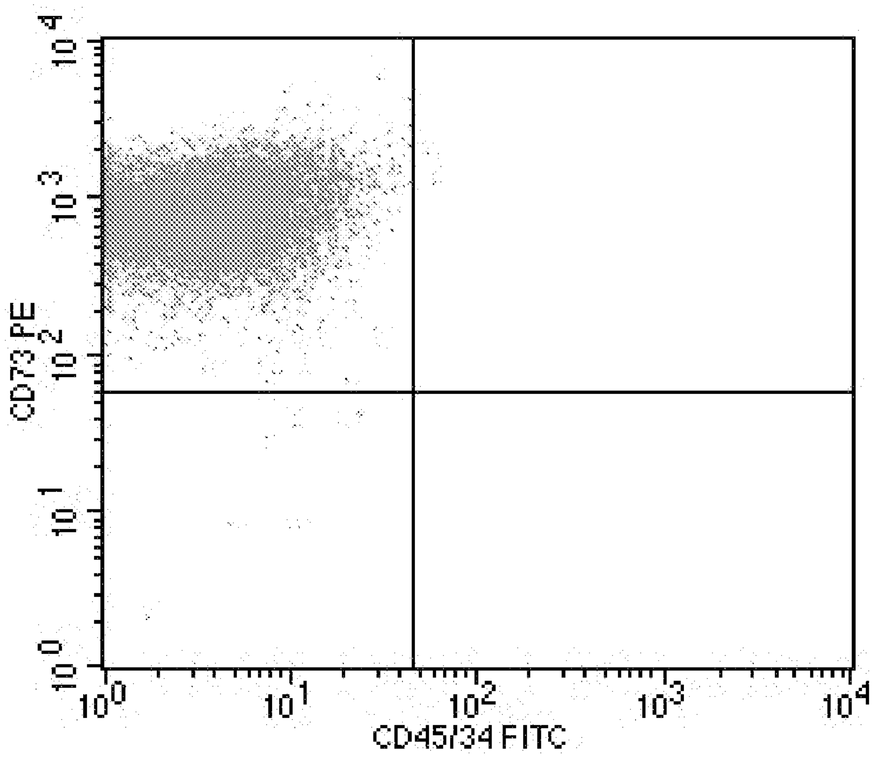


Fig. 5 (4/4)

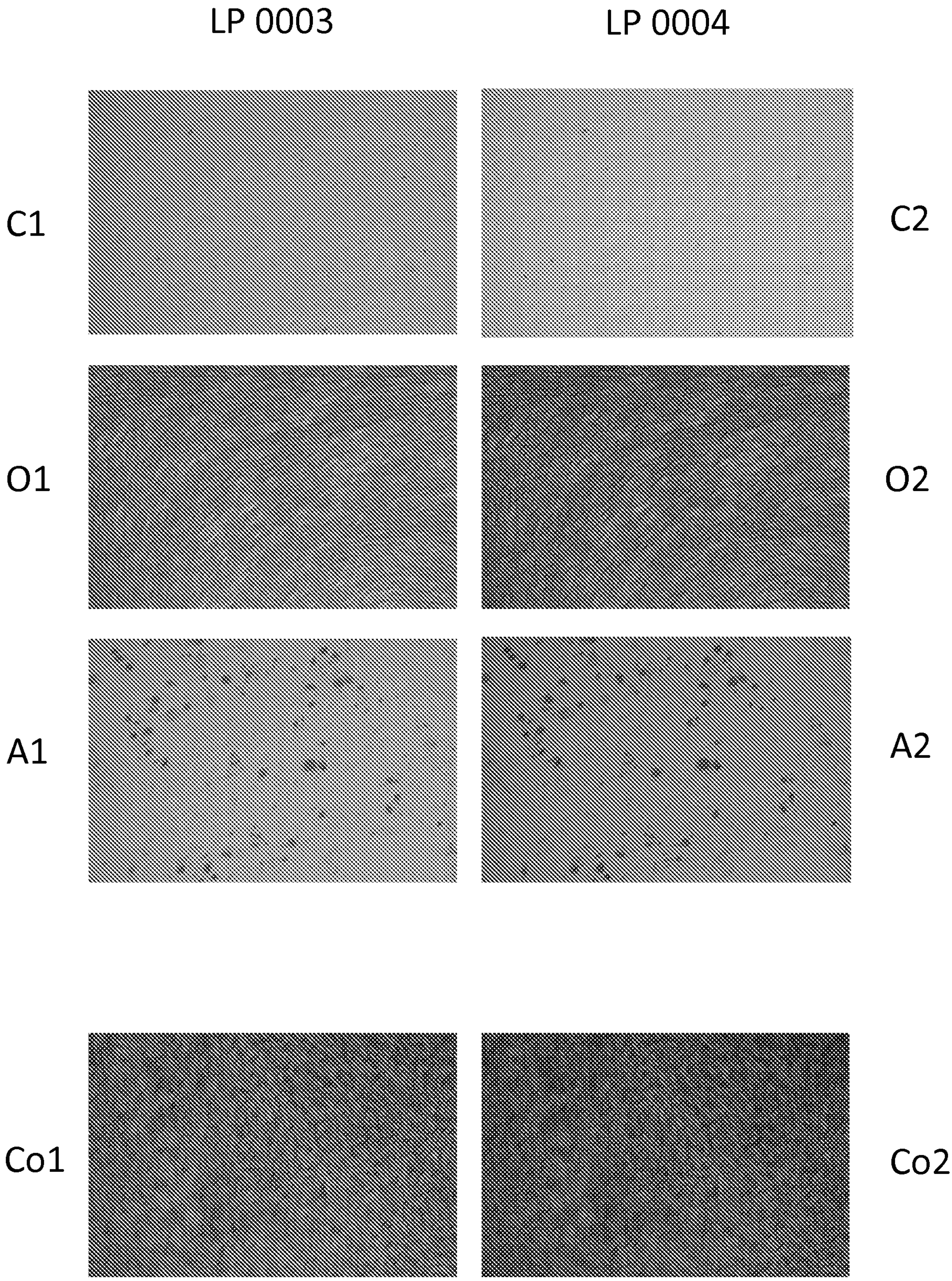


Fig. 6

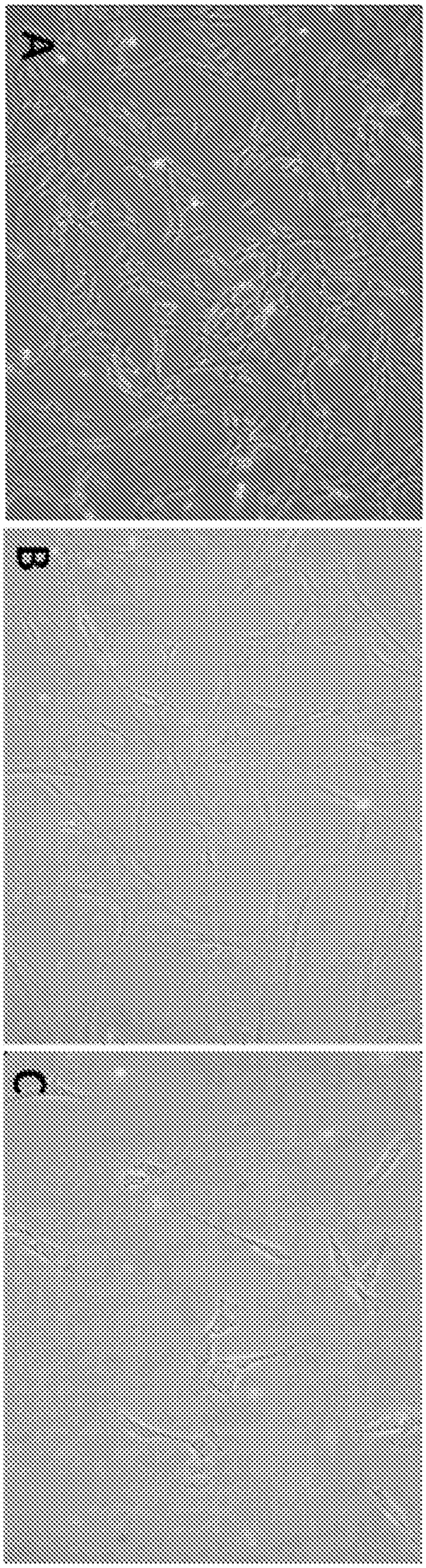


Fig. 7

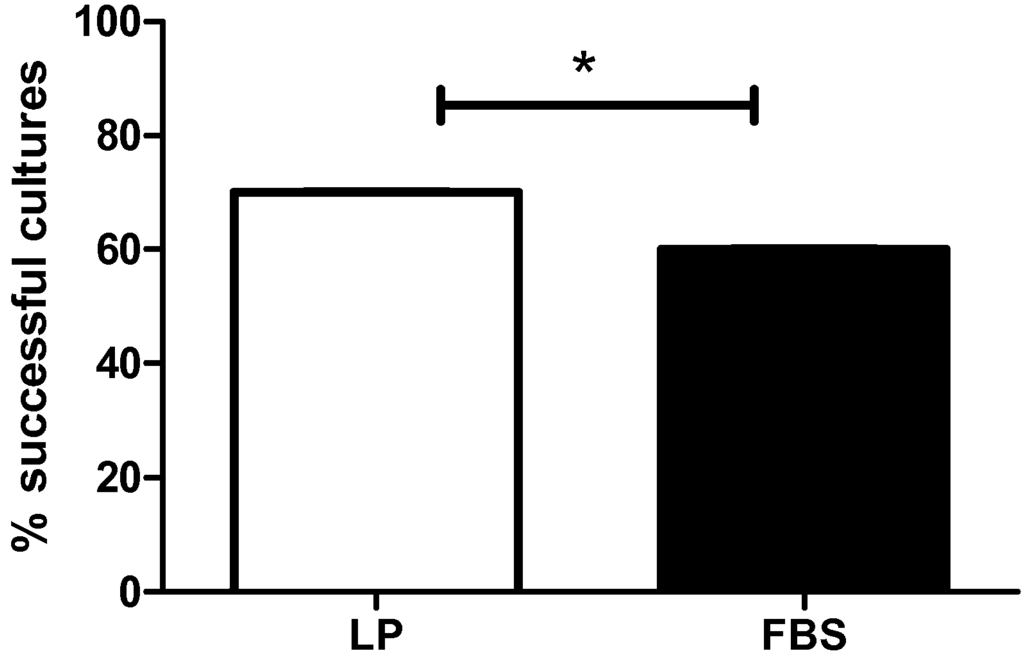


Fig. 8

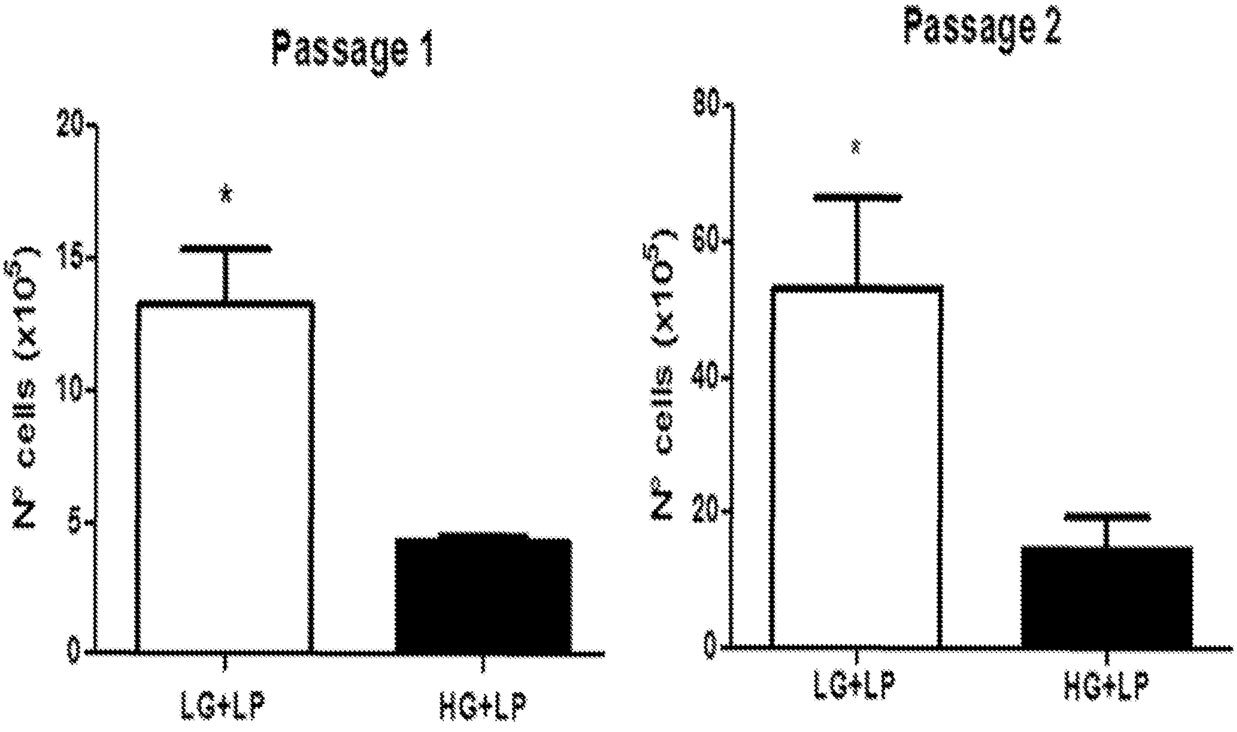
Passage 1
Nº cells (x10^5)
20
15
10
5
0
*
LG+LP
HG+LP
Passage 2
Nº cells (x10^5)
80
60
40
20
0
*
LG+LP
HG+LP

Fig. 9

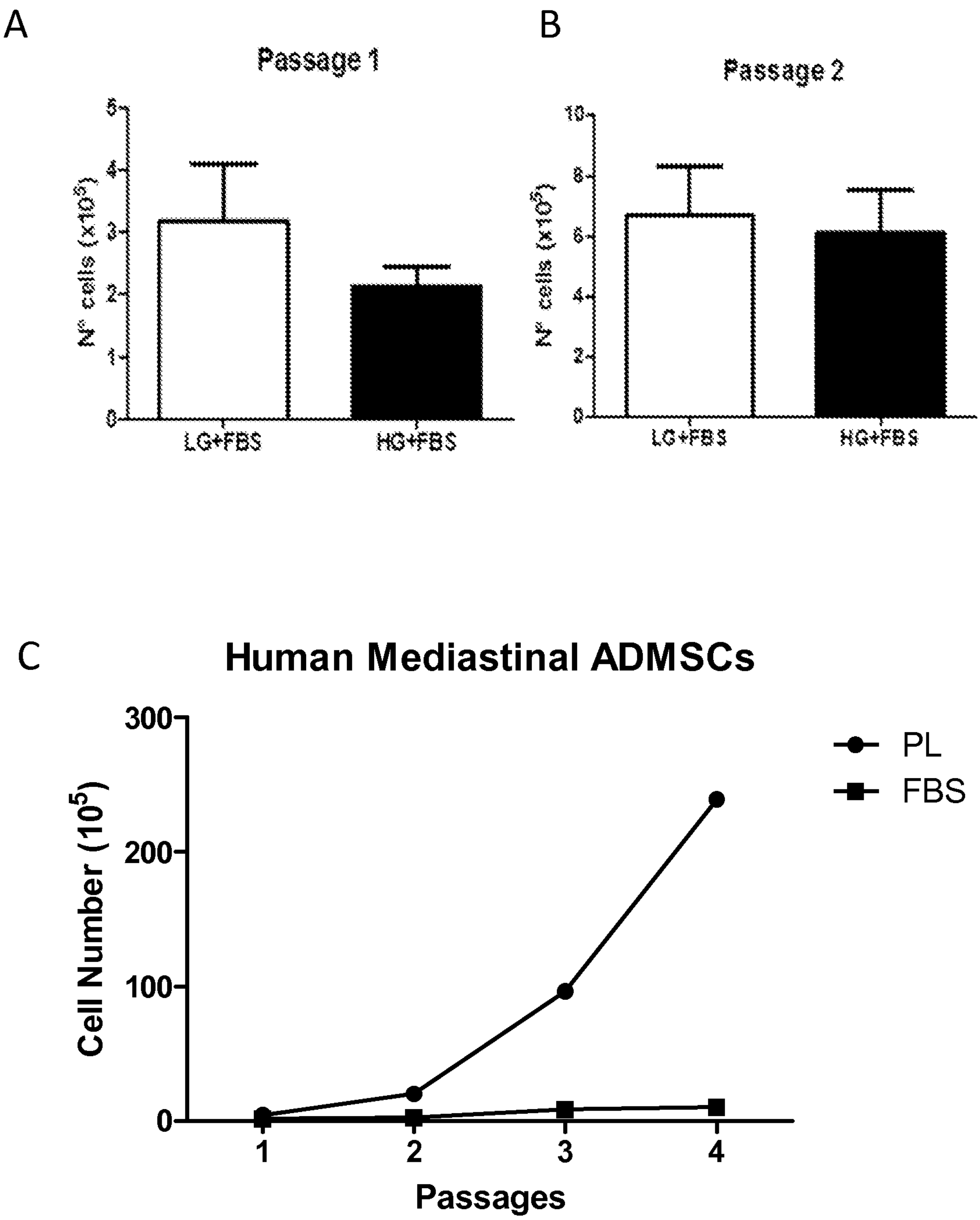
A
Passage 1
N° cells (x10^5)
0
1
2
3
4
5
LG+FBS
HG+FBS
B
Passage 2
N° cells (x10^5)
0
2
4
6
8
10
LG+FBS
HG+FBS
C
Human Mediastinal ADMSCs
Cell Number (10^5)
0
100
200
300
1
2
3
4
Passages
PL
FBS

Fig. 10

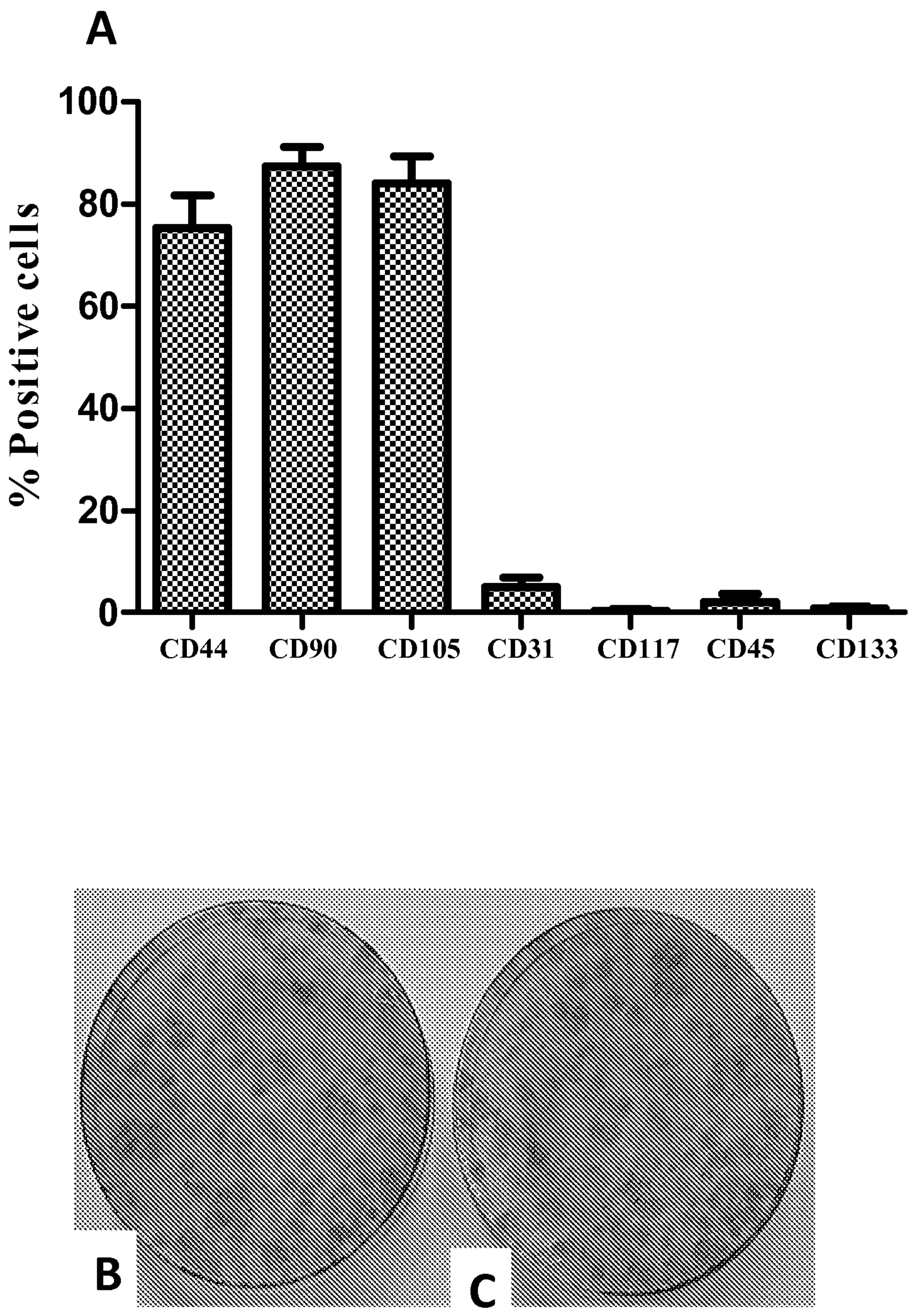
A
100
80
60
40
20
0
% Positive cells
CD44
CD90
CD105
CD31
CD117
CD45
CD133
B
C

Fig. 11

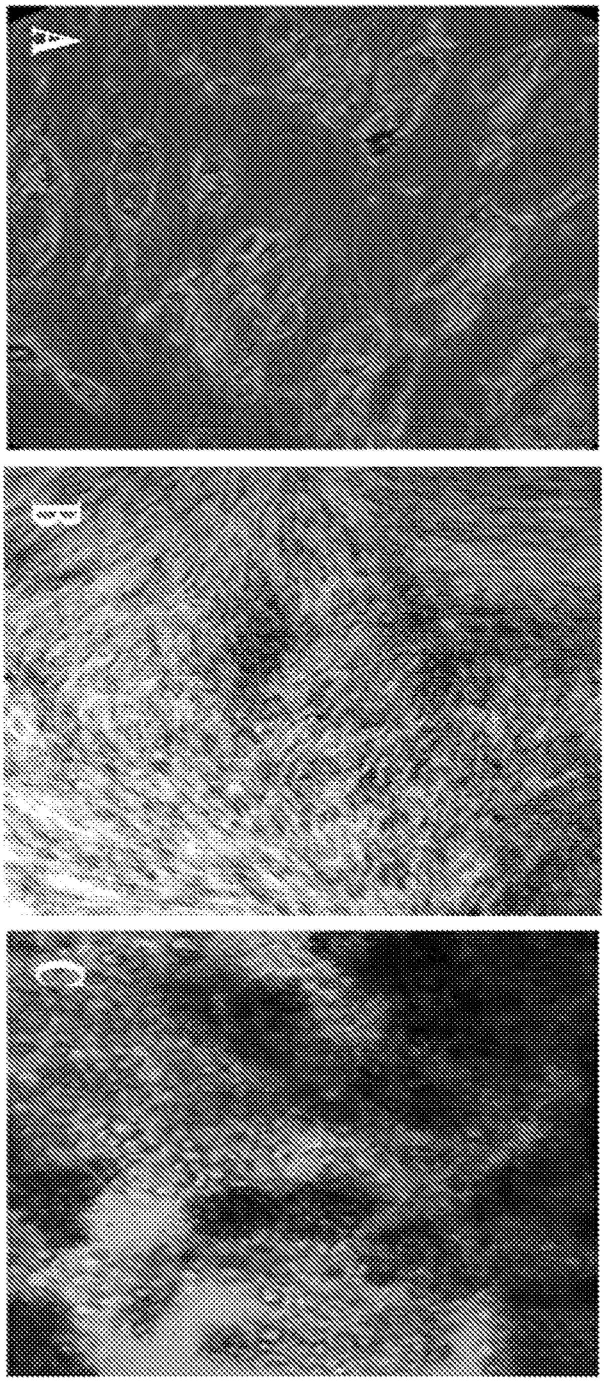


Fig. 12

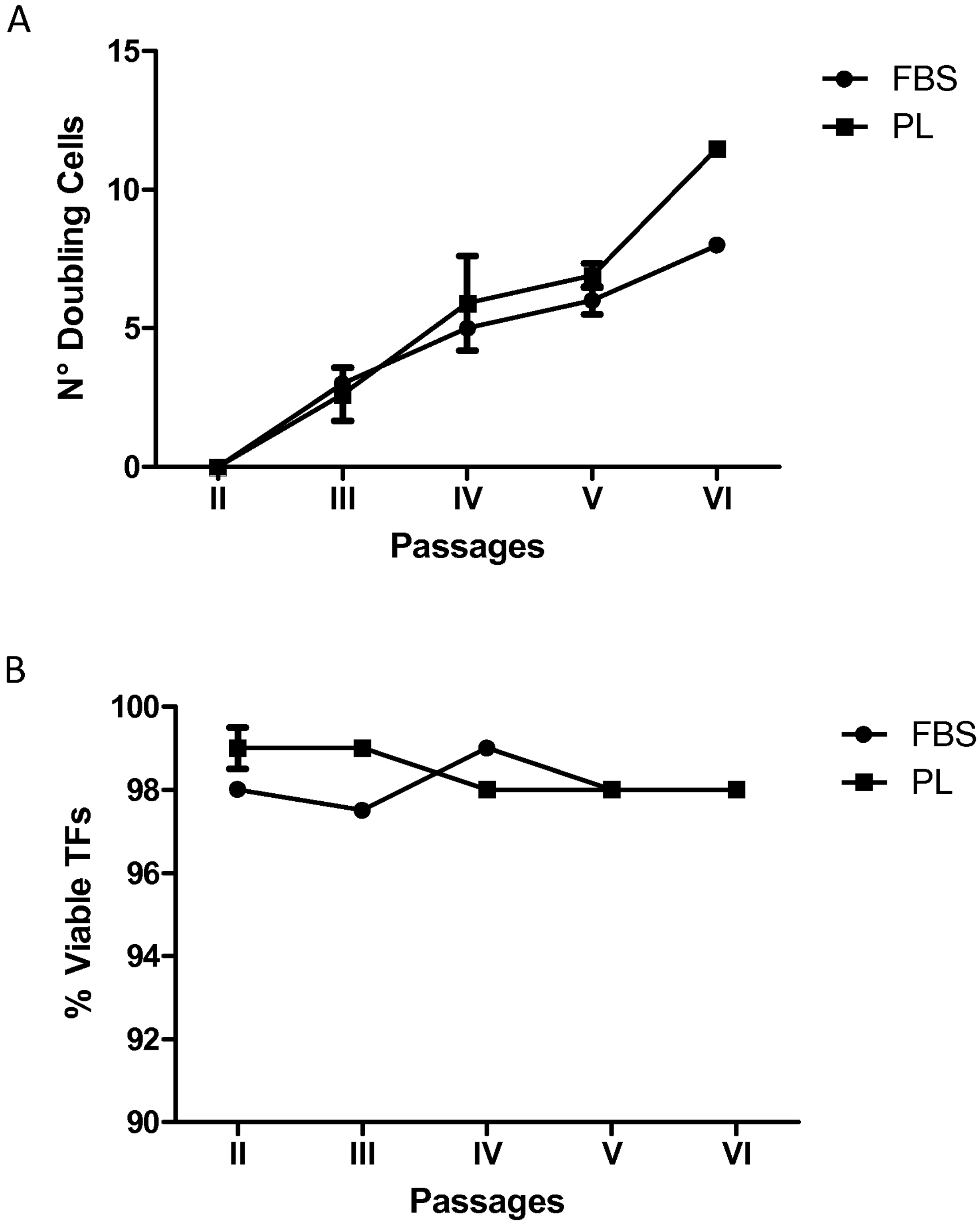
A
15
10
5
0
N° Doubling Cells
II
III
IV
V
VI
Passages
FBS
PL
B
100
98
96
94
92
90
% Viable TFs
II
III
IV
V
VI
Passages
FBS
PL

Fig. 13

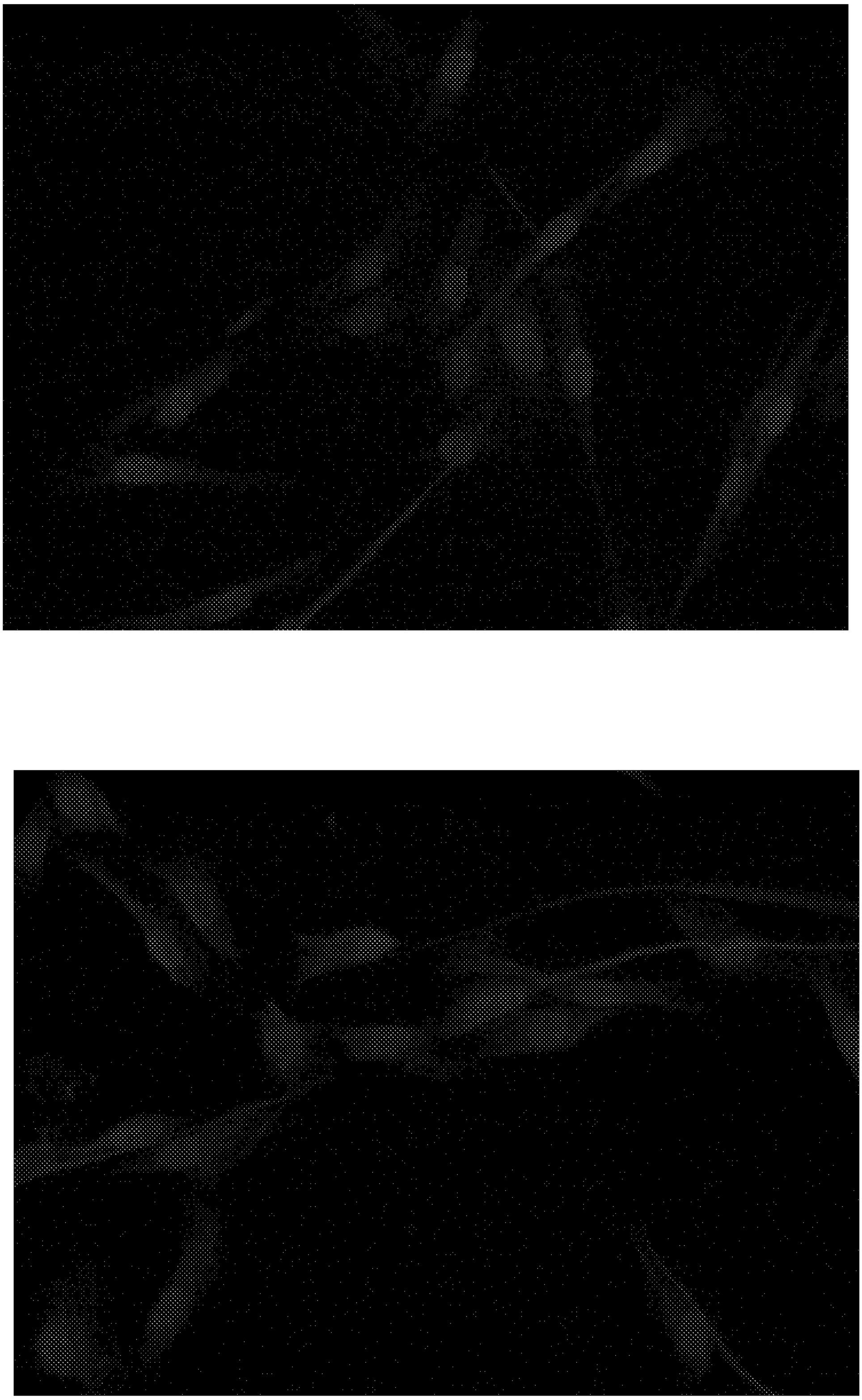

Fig. 14

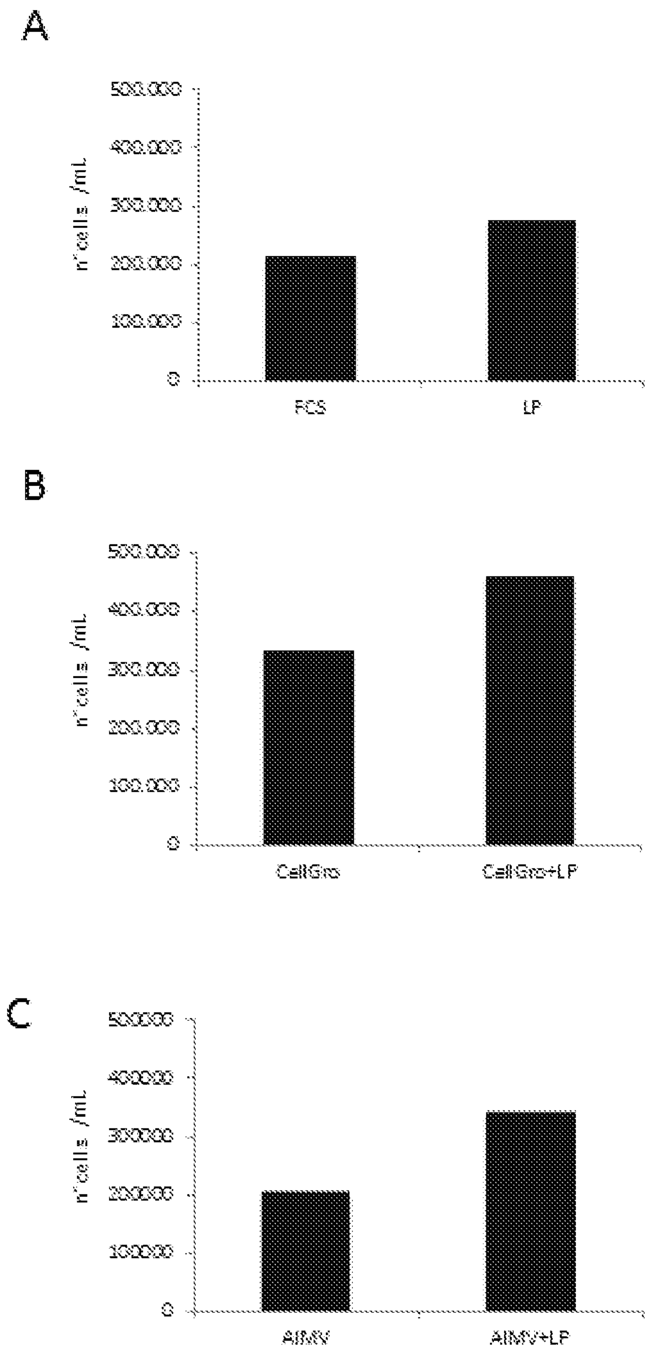
A
500.000
400.000
300.000
200.000
100.000
0
n° cells /mL
FCS
LP
B
500.000
400.000
300.000
200.000
100.000
0
n° cells /mL
CellGro
CellGro+LP
C
500000
400000
300000
200000
100000
0
n° cells /mL
AIMV
AIMV+LP

Fig. 15

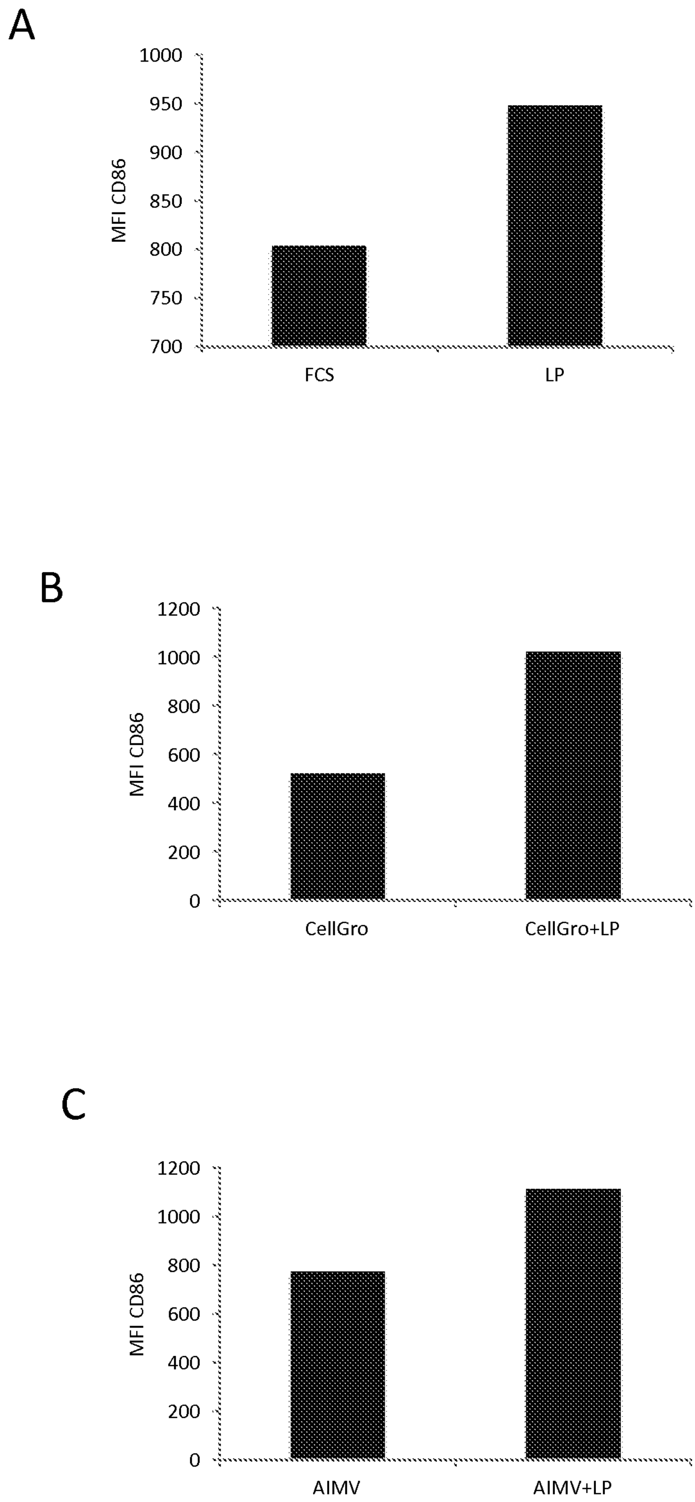
A
1000
950
900
850
800
750
700
MFI CD86
FCS
LP
B
1200
1000
800
600
400
200
0
MFI CD86
CellGro
CellGro+LP
C
1200
1000
800
600
400
200
0
MFI CD86
AIMV
AIMV+LP

Fig. 16

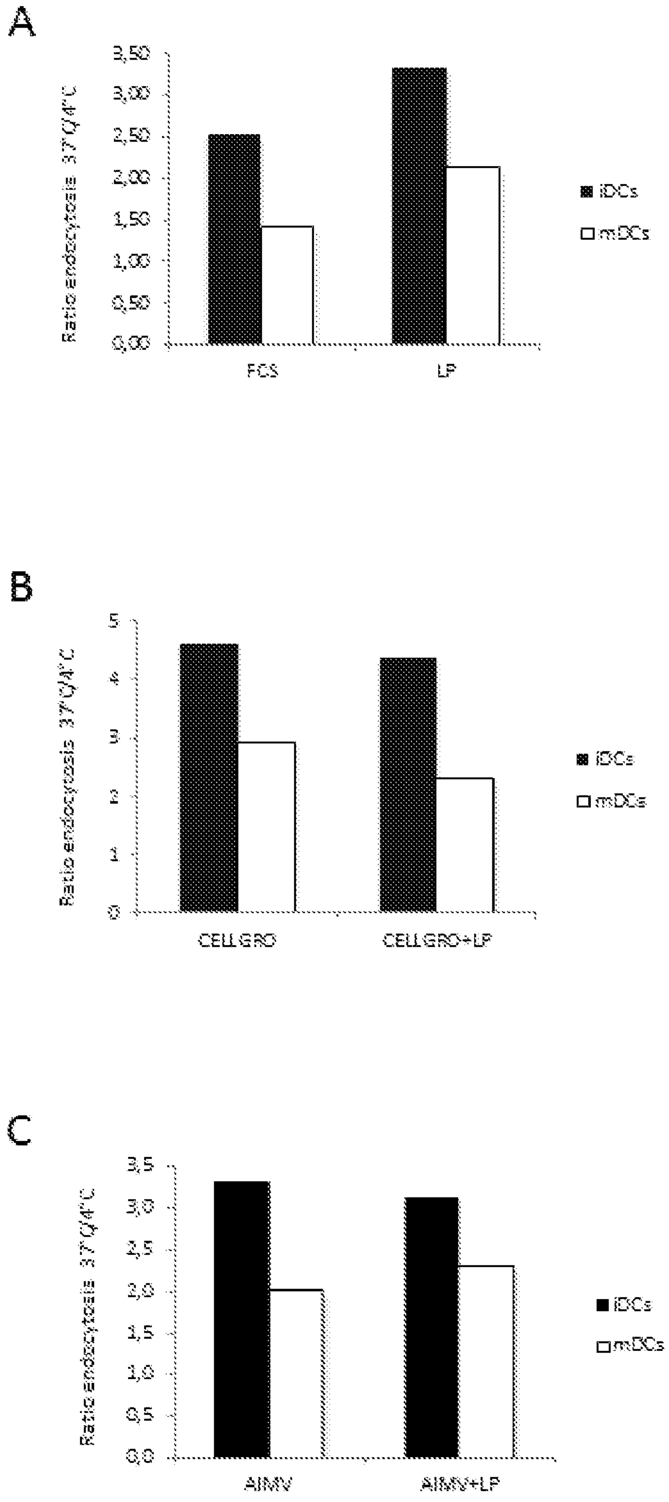
A
3,50
3,00
2,50
2,00
1,50
1,00
0,50
0,00
Ratio endocytosis 37°C/4°C
iDCs
mDCs
FCS
LP
B
5
4
3
2
1
0
Ratio endocytosis 37°C/4°C
iDCs
mDCs
CELLGRO
CELLGRO+LP
C
3,5
3,0
2,5
2,0
1,5
1,0
0,5
0,0
Ratio endocytosis 37°C/4°C
iDCs
mDCs
AIMV
AIMV+LP

Fig. 17

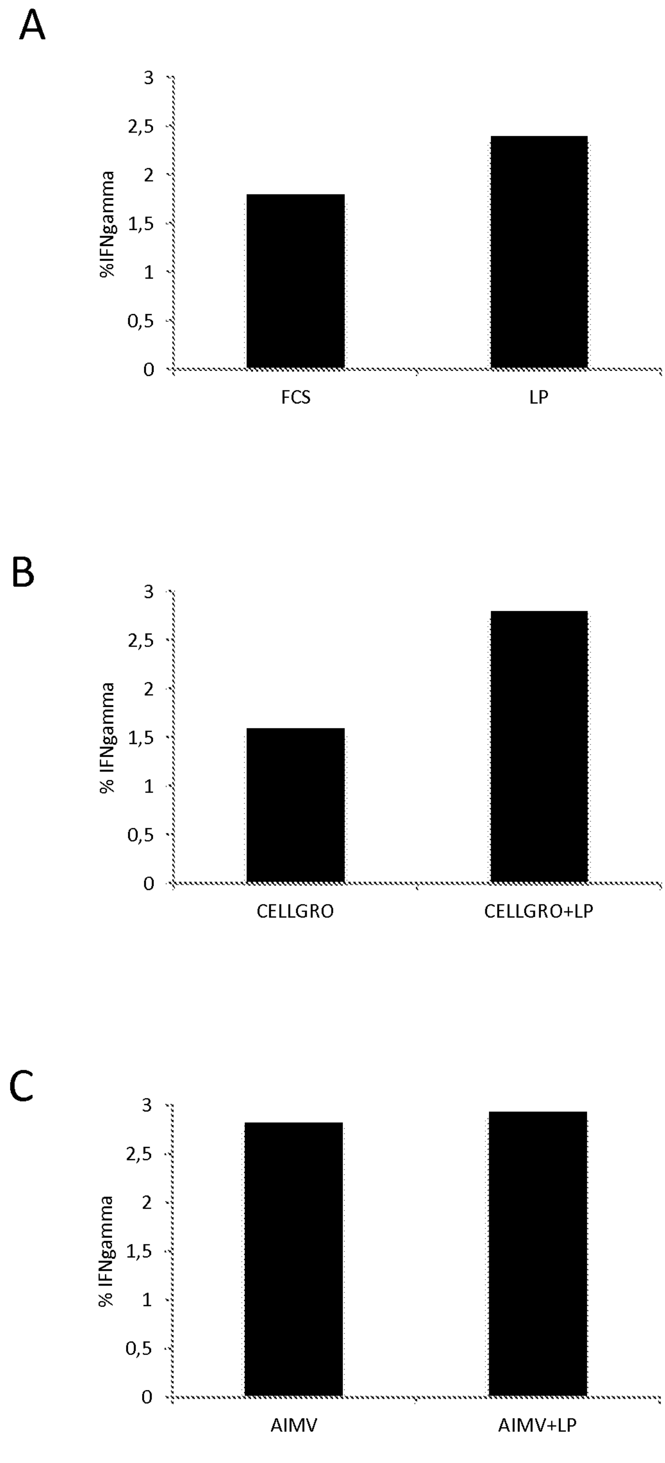
A
3
2,5
2
1,5
1
0,5
0
%IFNgamma
FCS
LP
B
3
2,5
2
1,5
1
0,5
0
% IFNgamma
CELLGRO
CELLGRO+LP
C
3
2,5
2
1,5
1
0,5
0
% IFNgamma
AIMV
AIMV+LP

Fig. 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2100954 A
- WO 8910398 A

### Non-patent literature cited in the description


- **VAN RHENEN et al.** Functional characteristics of S-59 photochemically treated platelet concentrates derived from buffy coats. *Vox Sanguinis,* 2000, vol. 79 (4), 206-214
- **H. G. KLEIN.** Pathogen inactivation technology: cleansing the blood supply. *Journal of internal medicine,* 2005, vol. 257 (3), 224-237
- **LILY LIN et al.** Inactivation of viruses in platelet concentrates by photochemical treatment with amotosalen and long-wavelength ultraviolet light. *Transfusion,* 2005, vol. 45 (4), 580-590
- **PITTENGER MF ; MACKAY AM ; BECK SC et al.** *Science,* 1999, vol. 284, 143-147
- **LAZARUS HM et al.** *Bone Marrow Transplant,* 1995, vol. 16, 557-564
- **DOUCET C ; ERNOU I ; ZHANG Y et al.** *J Cell Physiol,* 2005, vol. 205, 228-236
- **SCHALLMOSER K ; BARTMANN C ; ROHDE E et al.** *Transfusion,* 2007, vol. 47, 1436-1446
- **DWYRE DM ; FERNANDO LP ; HOLLAND PV.** *Vox Sanguinis,* 2011, vol. 100, 92-98
- **WAGNER SJ.** *Vox Sanguinis,* 2004, vol. 86, 157-163
- **VAMVAKAS EC.** *Transfusion,* 2011, vol. 51, 1058-1071
- **QUAGLIETTA A ; PIERELLI L ; OSTUNI A et al.** *Vox Sanguinis,* 2011, vol. 101 (1), 185
- **PICKER SM ; SPEER R ; GATHOF BS.** *Transfusion,* 2004, vol. 44, 320-329
- **KOCAOEMER A ; KERN S ; KLUTER H et al.** *Stem Cells,* 2007, vol. 25, 1270-1278
- **PARAZZI V ; LAZZARI L ; REBULLA P.** *Platelets,* 2010, vol. 21, 549-554
- **BRANDO B ; BARNETT D ; JANOSSY G et al.** *Cytometry,* 2000, vol. 42, 327-346
- **PITTENGER, M. F. et al.** *Science,* 1999, vol. 284, 143-147
- **HOWELL, J. C. et al.** *Ann. N. Y. Acad. Sci.,* 2003, vol. 996, 158-173
- **ARAI, F. et al.** *J. Exp. Med.,* 2002, vol. 195, 1549-1563
- **ZUK, P. A. et al.** *Mol. Biol. Cell,* 2002, vol. 13, 4279-4295
- **GRONTHOS, S. et al.** *J. Cell Sci.,* 2003, vol. 116, 1827-1835
- **DE UGARTE DA et al.** *Immunol Lett.,* 2003, vol. 89 (2-3), 267-270
- **BOQUEST AC et al.** *Mol Biol Cell,* 2005, vol. 16 (3), 1131-1141
- **CASTEILLA L et al.** *Curr Stem Cell Res Ther,* June 2010, vol. 5 (2), 141-4
- **SCHAFFLER A ; BUCHLER C.** *Stem Cells,* 2007, vol. 25 (4), 818-827
- **STREM BM et al.** *Keio J Med,* 2005, vol. 54 (3), 132-141
- **PLANAT-BENARD V et al.** *Circulation,* 2004, vol. 109, 656-663
- **PLANAT-BENARD V et al.** *Circ Res,* 2004, vol. 94, 223-29
- **RANGAPPA S et al.** *Ann Thorac Surg.,* March 2003, vol. 75 (3), 775-9
- **GAUSTAD KG et al.** *Biochem Biophys Res Commun.,* 2004, vol. 314, 420-427
- **STREM BM et al.** *Cytotherapy,* 2005, vol. 7, 282-91
- **YAMADA Y et al.** *Biochem Biophys Res Commun.,* 2006, vol. 342, 662-70
- **MIYAHARA Y et al.** *Nat Med.,* 2006, vol. 12, 459-65
- **BAGLIONI, S. et al.** *FASEBJ.,* 2009, vol. 10, 3494-3505
- **PATEL A.N. et al.** *Cell transplantation,* 2012
- **SMYTH RJ ; MORE JJ ; SHAPOURIFAR-TEHRANI S ; LEE DA.** *J Ocul Pharmacol Winter,* 1991, vol. 7 (4), 329-38
- **O'NEIL EC ; QIN Q ; VAN BERGER NJ et al.** *Invest Ophtalmol Vis Sci.,* 2010, vol. 51 (12), 6524-32
- **DENK, P.O. ; HOPPE, J. ; HOPPE, V. ; KNORR, M.** *Curr. Eye Res.,* 2003, vol. 27 (1), 35-44
- **CHORITZ L et al.** *Graefes Arch Clin Exp Ophtalmol,* February 2010, vol. 248 (2), 197-206
- **KOTTLER UB ; JÜNEMANN AG ; AIGNER T et al.** *Exp. Eye Res.,* 2005, vol. 80, 121-134
- **WENDT MD ; SOPARKAR CN ; LOUIE K et al.** *J. Glaucoma,* 1997, vol. 6 (6), 402-7
- **LENG F ; LIU P ; LI H et al.** *Curr. Eye Res.,* 2011, vol. 36 (4), 301-309

- **CROVETTI G et al.** *Transfus Apher Sci,* 2004, vol. 30, 145-151
- **INTINI G.** *Biomaterials,* 2009, vol. 30, 4956-4966
- **MAZZUCCO L et al.** *Transfusion,* 2004, vol. 44, 1013-1018
- **OGINO Y et al.** *Oral Surg Oral Med Oral Pathol Oral Radiol Endod,* 2006, vol. 101, 724-729
- **ANITUA E et al.** *Biomaterials,* 2007, vol. 28, 4551-4560
- **DE FALCO E. et al.** *Cell Tissue Bank,* 2012
- **SHAKHAR G.** *Nat Immunol,* 2005
- **PALUCKA K.** *Nat Rev Cancer,* 2012